# EUROPEAN PATENT APPLICATION

(11) **EP 4 822 384 A1**
(43) Date of publication of application: **14.10.2026**
(21) Application number: 24900651.1
(22) Date of filing: 04.12.2024
(51) Int. Cl.: G01S 5/02, G01S 13/84

(54) **POSITION DETECTING SYSTEM, POSITION DETECTING METHOD, AND COMPUTER**

(30) Priority: 07.12.2023 JP 2023206917
(71) Applicant: DENSO CORPORATION, Aichi-pref 448-8661 (JP)
(72) Inventor: NAKANO Yuichiro, Kariya- city, Aichi -pref., 448-8661 (JP); SAIKI Takashi, Kariya- city, Aichi -pref., 448-8661 (JP); TAKASHIMA Kei, Kariya- city, Aichi -pref., 448-8661 (JP); INAGAKI Tatsuya, Kariya- city, Aichi -pref., 448-8661 (JP); SUGIYAMA Hironao, Kariya- city, Aichi -pref., 448-8661 (JP)
(74) Representative: Winter, Brandl - Partnerschaft mbB
(86) International application number: PCT/JP2024/042904
(87) International publication number: WO 2025/121357

(57) **Abstract**

A DK-ECU (1) determines whether a mobile device (9) supports wireless communication using a second communication method, based on wireless communication with the mobile device (9) using a first communication method. In response to determining that the mobile device supports wireless communication using the second communication method, a communication module (2) is instructed to perform wireless communication with the mobile device (9) using the second communication method, and a position related value related to the position of the mobile device is obtained from a wireless communication signal using the second communication method. In response to determining that the mobile device (9) does not support wireless communication using the second communication method, the position related value is obtained from a wireless communication signal using the first communication method. The acquired position related value is used to determine the position (area) of the mobile device (9) relative to the vehicle (Hv).

## Description

### CROSS REFERENCE TO RELATED APPLICATION

This application is based on Japanese Patent Application No. 2023-206917 filed on December 7, 2023, the disclosure of which is incorporated herein by reference.

### TECHNICAL FIELD

The present disclosure relates to a technology for detecting a position of a mobile device relative to an object by performing a wireless communication between a communication module mounted on the object and the mobile device.

### BACKGROUND ART

Patent literature 1 discloses a mobile equipment, which establishes a Bluetooth (registered trademark) Low Energy (BLE) communication connection with a communication gateway mounted on a vehicle, and then performs impulse radio ultra-wideband (IRUWB) communication with at least one sensor mounted on the vehicle.

### PRIOR ART LITERATURE

### PATENT LITERATURE

Patent Literature 1: JP 6988986 B

### SUMMARY

The mobile equipment described in Patent literature 1 (hereinafter also referred to as a mobile device) is configured to perform BLE communication and IRUWB communication. However, not all mobile devices have both of BLE communication function and IRUWB communication function. The use of BLE channel sounding (CS) communication may be considered as a technology for detecting a position of a mobile device. In BLECS communication, continuous waves, such as sine waves, whose frequencies are changed periodically, are transmitted and received. Thus, there are multiple variations in communication methods for determining the position of mobile device relative to an object (for example, a vehicle). Suppose that a communication module mounted on an object supports multiple different communication methods for determining the position of the mobile device. However, as described above, not all mobile devices support above-described different communication methods. Therefore, even when the communication method supported by the communication module does not match the communication method supported by the mobile device, a technology that can absorb the difference in different communication methods and appropriately detect the position of the mobile device is required.

The present disclosure is made in view of the above-described difficulty, and aims to provide a position detection system, a position detection method, and a computer, each of which can detect a position of a mobile device even when multiple communication methods supported by a communication module mounted on an object do not match a communication method supported by the mobile device.

To achieve the above object, a position detection system described herein detects a position of a mobile device relative to an object. The position detection system includes a communication module mounted on the object and performing a wireless communication with the mobile device using a first communication method. The communication module is further configured to enable a wireless communication with the mobile device using a second communication method different from the first communication method. The position detection system includes a determination unit determines whether the mobile device supports the wireless communication using the second communication method based on the wireless communication with the mobile device using the first communication method. The position detection system includes an acquisition unit configured to, in response to the determination unit determining that the mobile device supports the wireless communication using the second communication method, instruct the communication module to perform the wireless communication with the mobile device using the second communication method and acquire a position related value related to the position of the mobile device from a wireless communication signal, which is transmitted from the mobile device using the second communication method. The acquisition unit is further configured to, in response to the determination unit determining that the mobile device does not support the wireless communication using the second communication method, acquire a position related value related to the position of the mobile device from a wireless communication signal, which is transmitted from the mobile device using the first communication method. The position detection system includes a decision unit configured to decide the position of the mobile device relative to the object or an area in which the mobile device is located, based on the position related value acquired by the acquisition unit.

A position detection method described herein is performed by a computer for detecting a position of a mobile device relative to an object. The position detection method includes performing, using a communication module mounted on the object, a wireless communication with the mobile device using a first communication method. The communication module is further configured to enable a wireless communication with the mobile device using a second communication method different from the first communication method. The position detection method includes determining whether the mobile device supports the wireless communication using the second communication method based on the wireless communication with the mobile device using the first communication method. The position detection method includes, in response to determining that the mobile device supports the wireless communication using the second communication method, instructing the communication module to perform the wireless communication with the mobile device using the second communication method and acquiring a position related value related to the position of the mobile device from a wireless communication signal, which is transmitted from the mobile device using the second communication method. The position detection method includes, in response to determining that the mobile device does not support the wireless communication using the second communication method, acquiring a position related value related to the position of the mobile device from a wireless communication signal, which is transmitted from the mobile device using the first communication method. The position detection method includes deciding the position of the mobile device relative to the object or an area in which the mobile device is located, based on the position related value.

A computer disclosed herein executes a process to detect a position of a mobile device relative to an object based on a wireless communication signal communicated in a wireless communication between a communication module mounted on the object and the mobile device. The communication module is configured to enable a wireless communication with the mobile device using a first communication method and a second communication method different from the first communication method. The computer is configured to execute the following instructions comprising: determining whether the mobile device supports the wireless communication using the second communication method based on the wireless communication with the mobile device using the first communication method; in response to determining that the mobile device supports the wireless communication using the second communication method, instructing the communication module to perform the wireless communication with the mobile device using the second communication method and acquiring a position related value related to the position of the mobile device from a wireless communication signal, which is transmitted from the mobile device using the second communication method, in response to determining that the mobile device does not support the wireless communication using the second communication method, acquiring a position related value related to the position of the mobile device from a wireless communication signal, which is transmitted from the mobile device using the first communication method; and deciding the position of the mobile device relative to the object or an area in which the mobile device is located, based on the position related value.

According to the position detection system, the position detection method, and the computer described above, whether the mobile device supports wireless communication according to the second communication method is determined based on the wireless communication with the mobile device according to the first communication method. In response to determining that the mobile device supports the wireless communication according to the second communication method, the communication module is instructed to perform the wireless communication with the mobile device using the second communication method. Then, a position related value related to the position of the mobile device is obtained from the wireless communication signal communicated with the mobile device using the second communication method. As described, when the mobile device supports the second communication method, the position related value related to the position of the mobile device can be obtained from the wireless communication signal communicated with the mobile device using the second communication method. In response to determining that the mobile device does not support the wireless communication according to the second communication method, the position related value related to the position of the mobile device is obtained from the wireless communication signal communicated with the mobile device using the first communication method. The calculated position related value is used to determine the position of the mobile device relative to the object or the area in which the mobile device is located. Therefore, the position detection system, the position detection method, and the computer described herein can detect the position of the mobile device even when the communication method supported by the communication module mounted on the object does not match the communication method supported by the mobile device.

The reference symbols and/or numerals in parentheses of claims are merely added to indicate examples of correspondence relationships with concrete structures in the below-described embodiments in order to facilitate the understanding of the present disclosure, which has no intention to limit the scope of the present disclosure in any manner.

Technical features described in claims other than the above-mentioned features become apparent from the description of the embodiments and the accompanying drawings.

### BRIEF DESCRIPTION OF DRAWINGS

FIG. 1 is a diagram showing an overall view of a vehicle electronic key system to which a position detection system is applied.
FIG. 2 is a block diagram showing a configuration of a mobile device.
FIG. 3 is a block diagram showing a configuration of a vehicle-mounted system.
FIG. 4 is a diagram showing an arrangement example of BLE modules in a vehicle.
FIG. 5 is a block diagram showing a configuration of the BLE module.
FIG. 6 is a diagram schematically showing a flow of CS ranging process.
FIG. 7 is a diagram showing an operation of a mobile device and a vehicle-mounted system when the mobile device and the vehicle-mounted system have not yet established a communication connection.
FIG. 8 is a diagram showing an operation of a mobile device and a vehicle-mounted system when a communication connection is established between the mobile device and the vehicle-mounted system, and the mobile device and the BLE module periodically communicate data via BLE communication.
FIG. 9 is a diagram showing an operation of a mobile device and a vehicle-mounted system when the mobile device and the vehicle-mounted system perform CS ranging communication.
FIG. 10 is a functional block diagram of a main controller.
FIG. 11 is a diagram showing an example of areas set inside and outside a vehicle in order to determine position of the device belongs to which area.
FIG. 12 is a flowchart showing an example of a process for determining whether a mobile device supports CS ranging communication.
FIG. 13 is a flowchart showing an example of a process for detecting a position of a mobile device, which is performed in a vehicle-mounted system.
FIG. 14 is a block diagram showing a configuration of a mobile device according to a second embodiment.
FIG. 15 is a block diagram showing a configuration of a vehicle-mounted system according to the second embodiment.
FIG. 16 is a diagram showing an arrangement example of BLE modules and UWB modules in a vehicle according to the second embodiment.
FIG. 17 is a diagram showing an operation of a mobile device and a vehicle-mounted system when the mobile device and the vehicle-mounted system perform UWB ranging communication.
FIG. 18 is a flowchart showing an example of a process for determining whether a mobile device supports CS ranging communication and UWB ranging communication according to the second embodiment.
FIG. 19 is a flowchart showing an example of a process for detecting a position of a mobile device, which is performed in a vehicle-mounted system according to the second embodiment.
FIG. 20 is a flowchart showing an example of a process that uses multiple ranging methods depending on an area where the mobile device is located, according to the second embodiment.
FIG. 21 is a flowchart showing an example of a process that uses multiple ranging methods according to a moving speed of a mobile device, according to the second embodiment.
FIG. 22 is a diagram showing a configuration according to a modification example.

### DESCRIPTION OF EMBODIMENTS

The following describes embodiments in which a position detection system, a position detection method, and a computer are applied to an electronic key system for vehicles, with reference to the accompanying drawings. However, the present disclosure is not limited to the following embodiments, and various modifications described below are also included in the technical scope of the present disclosure. In addition to the following embodiments, various modifications can be made without departing from the spirit of the present disclosure. The embodiments and various modification examples can be combined as appropriate within the scope of the present disclosure without causing any technical contradiction. Components having the same function are denoted by the same reference symbol, and the description thereof may be omitted. In addition, in a case where only a part of the configuration is referred to in an embodiment or modification example, the description in the foregoing embodiment may be applied to the remaining configuration.

### (First Embodiment)

### (Overall configuration)

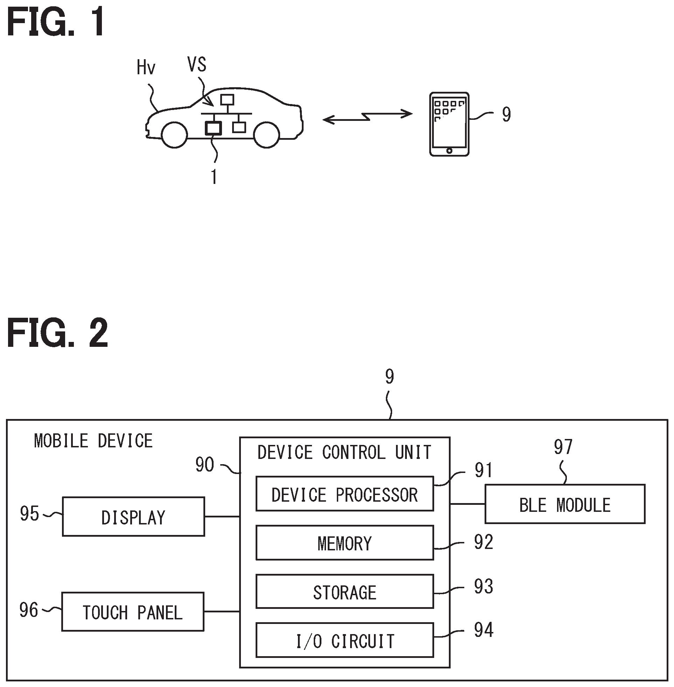

As shown in FIG. 1, a vehicle electronic key system of the present embodiment includes a vehicle-mounted system VS and a mobile device 9. The vehicle-mounted system VS includes a digital key ECU (hereinafter referred to as DK-ECU) 1. ECU is an abbreviation for electronic control unit and means an electronic control unit. The DK-ECU 1 may be implemented by a computer, microcontroller, or processor.

### (About DK-ECU 1)

The DK-ECU 1 is configured to perform a wireless communication (hereinafter referred to as BLE communication) compliant with Bluetooth LE with a mobile device 9 carried by a user of the vehicle Hv. The BLE communication corresponds to a first communication method. The DK-ECU 1 is configured to perform BLE channel sounding communication (hereinafter referred to as BLECS communication) with the mobile device 9. The BLECS communication corresponds to a second communication method. The BLECS communication will be discussed later. The following describes a case where the DK-ECU 1 serves as a master and the mobile device 9 serves as a slave in BLE communication performed between the DK-ECU 1 and the mobile device 9. The description of master can be read as central or scanner. The description of slave can be read as a peripheral or an advertiser.

The DK-ECU 1 establishes a communication connection with the mobile device 9 by receiving an advertising signal from the mobile device 9. An advertising signal is a signal used to notify other devices of its presence, that is, to advertise. The advertising signal may include a code indicating the source or destination of transmission. The source and destination can be represented by identifiers such as device IDs. In another embodiment, the vehicle electronic key system may be configured such that the mobile device 9 serves as the master and the DK-ECU 1 serves as the slave in the communication between the mobile device and the DK-ECU 1. The role of each device can be interchanged. The functions and configurations of the DK-ECU 1 and the mobile device 9 can be changed as appropriate in accordance with the changing of roles.

In the present disclosure, a wireless signal conforming to the BLE standard is referred to as a BLE signal. The BLE signal from the advertising channel may be referred to as the advertising signal, and the BLE signal from the data channel may be referred to as data signal. Of the 40 channels used for BLE communication, channels numbered 37 through 39 are designated as advertising channels. A channel with a channel number of 0 to 36 corresponds to a data channel. The definitions of the advertising channel and data channel, as well as their specific frequency values, are determined according to the BLE standard. In response to changes in the BLE standard, the configuration of the present disclosure may be modified as appropriate to comply with the revised standard.

### (Mobile Device 9)

The mobile device 9 is a portable and general-purpose information processing terminal having a BLE communication function. As the mobile device 9, various communication terminals, such as a smartphone or a wearable device can be adopted. The wearable device is a device to be worn on the user body and can adopt various forms, such as wristband, wristwatch, ring, eyeglass, and earphone types. The mobile device 9 may also be referred to as a user device, a key device, or the like.

The mobile device 9 may be a smart key, which is a dedicated device that serves as the electronic key for the vehicle Hv. Usually, the smart key is transferred to the owner together with the vehicle Hv when the vehicle Hv is purchased. A smart key can be understood as one of the accessories for a vehicle Hv. The smart key may be referred to as a mobile device for vehicle, a key fob, a key card, an access key, or the like.

As shown in FIG. 2, the mobile device 9 includes a device control unit 90, a display 95, a touch panel 96, and a BLE module 97.

The device control unit 90 is a module that controls an entire operation of the mobile device 9. The device control unit 90 is configured by a computer, for example, equipped with a device processor 91, memory 92, storage 93, input output circuit 94, or the like. The device processor 91 is, for example, a CPU (Central Processing Unit). The memory 92 is a volatile storage medium, such as RAM (Random Access Memory). The storage 93 includes a non-volatile storage medium, such as flash memory. The input output circuit 94 is a circuit for the device control unit 90 to receive signals from other components within the mobile device 9 and to output signals to other components within the mobile device 9.

The storage 93 may store the device ID and a key code used for wireless authentication between the DK-ECU 1. The key code may also be referred to as an encryption key or the like. A digital key application, which is application software for causing the mobile device 9 to function as a vehicle key, may be installed in the storage 93. The digital key application is an application for performing a secure communication with the DK-ECU 1, and for responding to inquiries or requests from the DK-ECU 1. In the present disclosure, application software may be simply referred to as an application or app.

The display 95 is, for example, a liquid crystal display or an organic EL display. The display 95 displays an image according to a signal input from the device control unit 90. The touch panel 96 is, for example, a capacitive touch panel, which is arranged on the display 95. The touch panel 96 is an input device included in the mobile device 9. The display 95 and touch panel 96 correspond to interfaces for the user to enter a password into the mobile device 9 to log in to the digital key application, or to input an operation for pairing the mobile device 9 with the vehicle-mounted system VS.

The BLE module 97 is a communication module for performing BLE communication. The BLE module 97 includes a received strength detection unit, which is a functional unit that measures a strength of the received signal. The measured signal strength can also be referred to as RSSI (Received Signal Strength Indicator). The BLE module 97 outputs data indicating the measured received strength, along with source information, to the device control unit 90, in addition to the received data.

The BLE module 97 may be configured to transmit and receive, in addition to the modulated signal for data communication, continuous wave (CW) signal having predetermined waveform as a signal for CS (Channel Sounding) ranging, which will be described later. The CW signal may have a waveform of a sine wave or a triangular wave. The BLE module 97 may have the same configuration as a BLE module 2 included in the vehicle-mounted system VS, which will be described later. The description of BLE module 2 may be partially or entirely adapted to the BLE module 97.

The device control unit 90 causes the BLE module 97 to transmit an advertising signal at a predetermined transmission interval (advertise interval) in order to initiate the BLE communication with the vehicle-mounted system VS. The device control unit 90 establishes a BLE communication connection with the vehicle-mounted system VS based in response that the BLE module 97 has received a connection request transmitted from the vehicle-mounted system VS in response to the advertising signal. The device control unit 90 may perform an authentication process in wireless manner (hereinafter referred to as wireless authentication process) based on the establishment of communication connection with the vehicle-mounted system VS. The wireless authentication process may be performed, for example, by a challenge-response method. In this case, in response to receiving a challenge code from the vehicle-mounted system VS, the device control unit 90 may generate a response code using the key code and transmit the generated response code back to the vehicle-mounted system VS.

When the BLE module 97 is equipped with a CS ranging function, the device control unit 90 performs communication for CS ranging based on a request from the vehicle-mounted system VS. For example, the device control unit 90 causes the BLE module 97 to transmit a CW signal of a specified channel (or frequency) based on a request from the vehicle-mounted system VS. The interaction between the device control unit 90 and the vehicle-mounted system VS will be described later.

### (About vehicle-mounted systems VS)

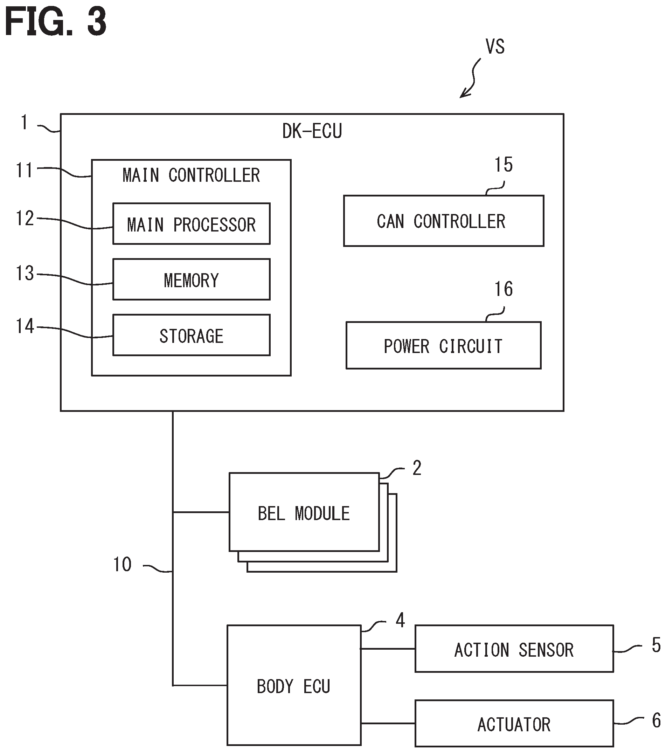

As shown in FIG. 3, the vehicle-mounted system VS includes the DK-ECU 1, the BLE module 2, a body ECU 4, an action sensor 5, and an actuator 6. The DK-ECU 1, the BLE module2, the body ECU4 are connected with one another via, for example, an in-vehicle network. As the standard of the in-vehicle network, various standards such as Controller Area Network (CAN: registered trademark), Ethernet (registered trademark), FlexRay (registered trademark), and the like can be adopted. The following explanation will focus on the case where CAN is adopted as the standard for in-vehicle network. The body ECU 4 is connected to the action sensor 5 and the actuator 6. The connection configuration of the components disclosed herein is an example and the configuration of connection can be modified as appropriate.

The DK-ECU 1 performs a process for determining the position of the mobile device 9 relative to the vehicle Hv based on the BLE signal (more specifically, the RSSI ranging result and CS ranging result of the BLE signal) communicated between the BLE module 2 of the vehicle-mounted system VS and the BLE module 97 of the mobile device 9. For example, the DK-ECU 1 detects the position of the mobile device 9 by determining, based on the BLECS signals communicated between multiple BLE modules 2 and the mobile device 9, whether the mobile device 9 is located in an entry area EA defined outside the vehicle or in an engine start area ESA defined inside the vehicle. Since the mobile device 9 corresponds to the user, detecting position of the mobile device is equivalent to detecting the position of user.

As shown in FIG. 3, the DK-ECU 1 includes a main controller 11, a CAN controller 15, and a power supply circuit 16. The main controller 11 is a computer that performs various processes related to detecting the position of the mobile device 9. The main controller 11 includes a main processor 12, a memory 13, and a storage 14. The main processor 12 is, for example, a CPU that performs predetermined process according to software. The memory 13 is a volatile storage medium, such as RAM.

The storage 14 includes a non-volatile storage medium, such as flash memory. The storage 14 stores a device position detection program to be executed by the main processor 12. When the main processor 12 executes the device position detection program, it is equivalent to executing a position detection method corresponding to the device position detection program. The storage 14 stores registration data that links the device ID of the mobile device 9 (for example, a predetermined Bluetooth address) with a CS support flag indicating whether the corresponding mobile device 9 supports BLECS communication. In addition, the storage 14 stores data indicating the mounting position of each BLE module 2 in the vehicle Hv.

The CAN controller 15 performs, in response to an instruction from the main controller 11, communication process with other components of the vehicle-mounted system VS according to CAN protocol. The CAN controller 15 performs transmission process, receiving process, and arbitration process as communication process. For example, the CAN controller 15 performs the receiving process in response that a data frame is stored in the receive buffer, and transmits the received data to the main controller 11. The receiving process includes determining whether the received data frame is a corrupted or invalid data frame by form checking, staff checking, and cyclic redundancy checking.

The power supply circuit 16 is a circuit module that supplies power to the main controller 11, the CAN controller 15, and others. The power supply circuit 16 converts the voltage input from the power cable (for example, battery voltage) into a voltage suitable for the operation of the main controller 11 and the CAN controller 15, and supplies the converted voltage to each component.

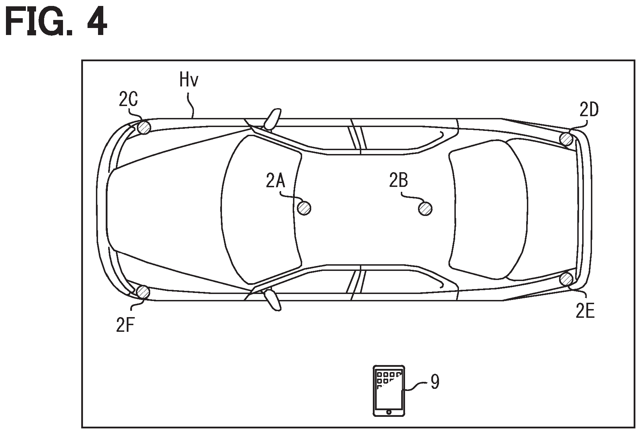

The BLE module 2 is a communication module for performing BLE communication. In the present embodiment, multiple BLE modules 2 are installed in the vehicle Hv. Each BLE module 2 is also referred to as an anchor. For example, as shown in FIG. 4, the BLE module 2 may include, for example, a front inside anchor 2A, a rear inside anchor 2B, a right front anchor 2C, a right rear anchor 2D, a left rear anchor 2E, and a left front anchor 2F. The front inside anchor 2A and the rear inside anchor 2B are both BLE modules 2 located inside the vehicle. The right front anchor 2C, the right rear anchor 2D, the left rear anchor 2E, and the left front anchor 2F are all BLE modules 2 located on the outer surface of the vehicle Hv. The configuration and performance of each BLE module 2 may be substantially the same regardless of the installation location. Note that the arrangement example of multiple BLE modules 2 shown in FIG. 4 is one example, and the multiple BLE modules 2 may be arranged in different locations from the example shown in FIG. 4.

The BLE module 2 is configured to transmit and receive CW signals for each channel (or frequency) as signals for CS ranging using BLECS communication, in addition to modulated signals for data communication using BLE communication. The BLE communication corresponds to the first communication method, and BLECS communication corresponds to the second communication method. The BLE module 2 is configured to scan advertising signals even while the vehicle Hv is in parked state, using power supplied from the vehicle battery.

The body ECU 4 is configured to detect a user operation (action) made on the vehicle Hv based on an input signal from the action sensor 5, and operate the actuator 6 in accordance with the detected user operation. Examples of the action made on the vehicle Hv by the user include a locking operation, an unlocking operation, seating, pressing of a start switch, stepping on a brake pedal, and the like. The action sensors 5 may include, for example, door sensors provided on the external door handles, start switch, brake pedal sensor, and seat occupancy sensor. The body ECU 4 can detect touch operations on the door sensor as unlocking/locking operation. The door sensor is configured to detect a user action to unlock or lock the door of vehicle Hv. The door sensor may be a touch sensor or a push switch. The start switch is a push switch for the user to switch on/off the traveling power supply.

The actuator 6 may include, for example, a lock motor, or a mechanism for switching the headlights or welcome lamps on and off. The lock motor is a motor used to lock or unlock the door. The welcome lamp is a vehicle-mounted lighting facility that illuminates a road surface or other objects located near the door. The welcome lamp may be equipped to a side mirror, a side sill, a lower end portion of a door panel, or the like.

The body ECU 4 may send an event occurrence notification signal to the DK-ECU 1 in response to detecting a predetermined event that requires detection of the position of mobile device 9, such as an unlocking operation. The DK-ECU 1 may perform control and processing related to the detection of device position in response to the input of event occurrence notification signal from the body ECU 4.

### (BLE Module Configuration and Function)

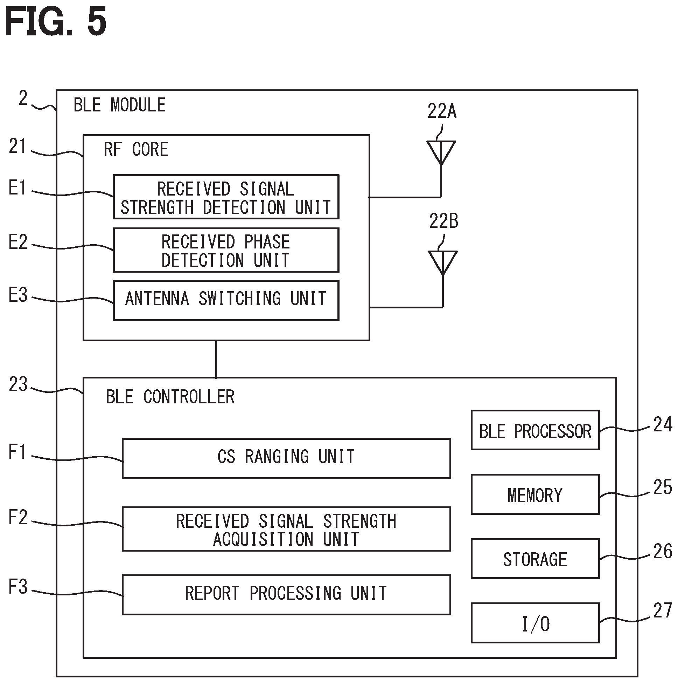

The following will describe an example of configuration and functions of the BLE module 2. As shown in FIG. 5, the BLE module 2 includes an RF core 21, an antenna 22, and a BLE controller 23.

The antenna 22 is an antenna element for transmitting and receiving radio waves in the frequency band used for BLE communication, that is, the 2.4 GHz band. The 2.4 GHz band can be understood as a frequency band that encompasses multiple channels (channel 0 to channel 39) used for BLE communication. The antenna 22 is electrically connected to the RF core 21. The channel may also be referred to as a frequency. Of the multiple channels assigned to the BLE communication, the channel actually used for communication (in other words, the use frequency/channel) changes over time due to frequency hopping or an instruction from the BLE controller 23.

The RF core 21 is a circuit module that performs signal processing related to the transmission and reception of wireless signals. The RF core 21 may include a modulation circuit, a demodulation circuit, a frequency conversion circuit, an amplifier circuit, a local oscillator, and the like. The RF core 21 also includes input and output terminals for receiving signals from the antenna 22 and outputting signals to the antenna 22.

In the present embodiment, the antenna 22 is implemented by multiple antennas 22A, 22B having different polarization axes, such as horizontal polarization and vertical polarization. These multiple antennas 22A and 22B are provided to achieve polarization diversity, which ensures a sufficient reception level of the CS ranging signal, by switching between multiple antennas 22A and 22B with different polarization axes when performing CS ranging communication. In the following description, when referring to the two antennas 22A and 22B together, they will simply be referred to as antenna 22. For example, when the RF core 21 performs data communication with the mobile device 9, the RF core 21 uses only one of the multiple antennas 22A and 22B. When the RF core 21 performs CS performs ranging communication with the mobile device 9, the antenna to be used by the RF core 21 is switched among the multiple antennas 22A and 22B. The switching of multiple antennas 22A and 22B is performed by the antenna switching unit E3 while the CS ranging signal maintains the same frequency. With this configuration, it is possible to transmit and receive CS ranging signals through multiple signal paths, thereby enabling highly accurate phase measurement of CS ranging signal in the CS ranging communication.

The BLE module 97 of the mobile device 9 may include multiple antennas, or may include a single antenna. For example, when the BLE module 97 of the mobile device 9 has two antennas, the BLE module 2 of the vehicle-mounted system VS and the BLE module 97 of the mobile device 9 can coordinately switch two antennas while the CS ranging signal maintains the same frequency, thereby enabling transmission and reception of the CS ranging signal via four signal paths. When the BLE module 97 of the mobile device 9 includes a single antenna, the CS ranging signal may be transmitted and received through multiple signal paths by simply switching the multiple antennas 22A and 22B of the BLE module 2 included in the vehicle-mounted system VS.

The RF core 21 is connected to the BLE controller 23 in a way that allows for mutual communication. The RF core 21 demodulates the signal received by the antenna 22 and transfers the demodulated signal to the BLE controller 23. The RF core 21 modulates the transmission data input from the BLE controller 23 and transmits the modulated signal as radio waves via the antenna 22. The RF core 21 may be implemented by an IC chip (that is, a transceiver IC).

The RF core 21 is configured to transmit and receive not only modulated signals for data communication, but also CW signal for each channel (frequency) as the CS ranging function. The RF core 21 includes a received signal strength detection unit E1 and a received phase detection unit E2. The received signal strength detection unit E1 is a functional unit that measures the strength of received signal. The received signal strength detection unit E1 outputs data indicating the detected signal strength to the BLE controller 23.

The received phase detection unit E2 is a circuit that detects the received phase, which is the phase angle of the received signal relative to the output signal of the local oscillator, when a CW ranging signal is received. The phase angle of the received signal relative to the output signal of the local oscillator corresponds to the received phase. In other words, the received phase can be understood as the output value of an arctangent that takes the ratio of the Q (Quadrature-Phase) component to the I (In-Phase) component of the received signal as input value. The magnitude of I component corresponds to the strength of in-phase component of the received signal. The magnitude of Q component corresponds to the strength of quadrature component of the received signal. The I component is obtained by multiplying the received signal by the carrier wave output from the local oscillator. The Q component is obtained by multiplying the received signal by a phase shift signal obtained by shifting the phase of signal output from the local oscillator by 90°. The phase shift signal can be obtained by passing the output signal from the local oscillator through a phase shift circuit, which shifts a phase by 90°.

The local oscillator is a circuit that generates a sine wave or a cosine wave at the carrier frequency, and is implemented by, for example, a voltage-controlled oscillator (VCO). The received phase may be determined based on the IQ signal with the frequency reduced to the baseband. The detected received phase information is used to calculate the device distance.

The RF core 21 provides the BLE controller 23 with a detected value of the received phase of CW ranging signal by associating the detected value with information indicating the use frequency (for example, channel number). The RF core 21 detects the received phase of CW signal as a step of the ranging process each time the use frequency is switched. That is, the BLE controller 23 is provided with data indicating the received phase for each frequency. In this case, the data showing the received phase for each frequency may include multiple received phases due to the polarization diversity described above.

The BLE controller 23 is implemented by a microcomputer that controls the RF core 21. The BLE controller 23 includes a processor 24, a memory 25, a storage 26, and an input output circuit 27. The BLE controller 23 controls the transfer of data between the BLE module and the DK-ECU 1. Specifically, the BLE controller 23 provides the received data input from the RF core 21 to the DK-ECU 1 sequentially or based on a request from the DK-ECU 1. The BLE controller 23 outputs the transmission data input from the DK-ECU 1 to the RF core 21.

The BLE controller 23 includes a CS ranging unit F1, a received signal strength acquisition unit F2, and a report processing unit F3. Each of the CS ranging unit F1, the received signal strength acquisition unit F2, and the report processing unit F3 may be either a software module or a hardware module. The following descriptions of the CS ranging unit F1, the received signal strength acquisition unit F2, and the report processing unit F3 can be replaced with BLE module 2 or BLE controller 23 as appropriate.

The CS ranging unit F1 is a functional unit that performs the CS ranging. In the present disclosure, the CS ranging refers to the process of generating distance data indicating the device distance based on position related value (received phase), which is a parameter indicating the length of propagation path of the wireless signal from the BLE module 2 to the mobile device 9. The CS ranging includes performing bidirectional or unidirectional communication with the mobile device 9 in order to acquire the received phase difference, which corresponds to the position related value. The CS ranging may also be referred to as High Accuracy Distance Measurement (HADM) or phase difference distance measurement. In the present disclosure, a series of processes including communication for CS ranging may also be referred to as CS ranging process.

In the present embodiment, the CS ranging unit F1 acquires the received phase for each frequency as part of the CS ranging process, and calculates the device distance based on the received phase. The received phase is the phase difference between the CW ranging signal transmitted by the mobile device 9 and the CW ranging signal received by the BLE module 2. The received phase can be referred to as a transmission received phase difference, a single frequency phase difference, or a first-order phase difference.

The CS ranging unit F1 can acquire the received phase for each frequency, for example, using one-way method. The one-way method assumes that the initial phase of the CW signal transmitted from the mobile device 9 for each frequency is constant, and uses the received phase of the CW signal transmitted from the mobile device 9 directly as the basis for calculating the inter-frequency phase difference. The received phase (in other words, the single frequency phase difference) used as the calculation basis of the inter-frequency phase difference can also be acquired by a passive two-way method, an active two-way method, or the like. The passive two-way method and the active two-way method will be described later as a supplement.

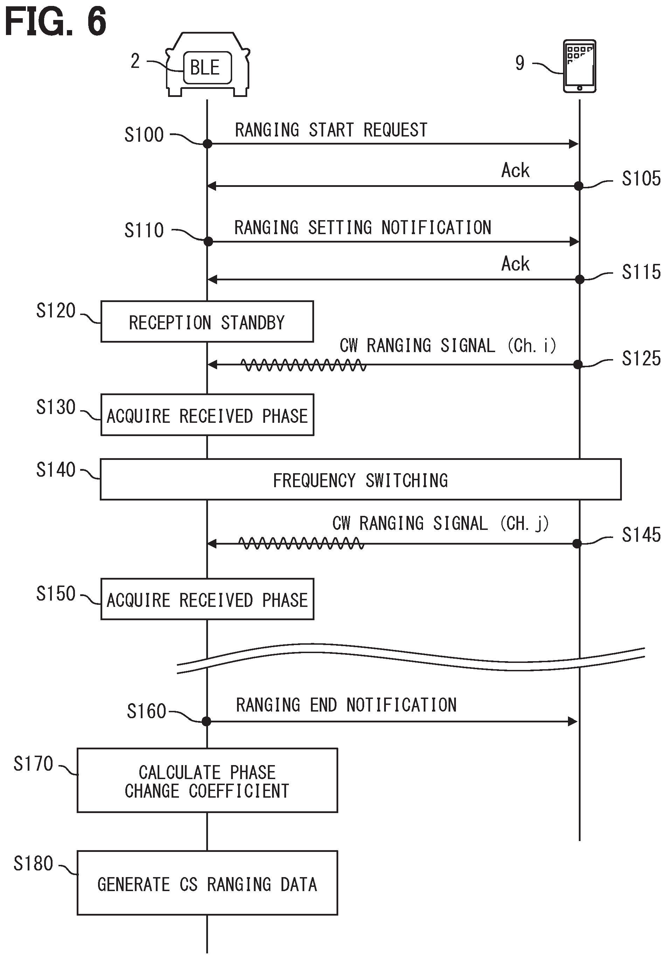

FIG. 6 is a flowchart showing an example of CS ranging processing using one-way method. The CS ranging process includes a preparation phase for adjusting a distance measurement execution condition, a collection phase for collecting a received phase by actually transmitting and receiving the CW ranging signal, and an arithmetic phase for calculating a distance based on the collected received phase for each frequency. In the present disclosure, wireless communication for acquiring a position related value (received phase), such as the transmission and reception of CW ranging signal, is also referred to as CW ranging communication.

In S100, the BLE module 2 transmits a CS ranging start request to the mobile device 9. The CS ranging start request is a BLE signal that requests the mobile device 9 to start the CS ranging. The CS ranging start request can be transmitted using a data channel. In S105, the mobile device 9, in response to having received the CS ranging start request, transmits a positive response signal (called as Ack) back to the BLE module 2.

In S110, BLE module 2 transmits a ranging setting notification signal in response to receiving, from the mobile device 9, the Ack corresponding to the CS ranging start request. The ranging setting notification signal is a signal that indicates the settings for performing CS ranging communication. The settings for performing ranging communication may include the initial phase setting, hopping interval, frequency transition amount, and initial frequency. The setting value of the initial phase is basically set to 0. The hopping interval represents a time period for switching the frequency, in other words, a time period for maintaining one frequency. The hopping interval may be the same as, or different from, the connection interval used for data communication. The frequency transition amount indicates the amount of frequency change during frequency switching. The frequency transition amount may be set the same as, or different from, the hop increment during the data communication. When the frequency transition amount is set the same as the hop increment during the data communication, the frequency transition amount in the CS ranging communication may be determined by the hop increment. The initial frequency is set as the frequency of the first CW ranging signal transmitted in a series of ranging communication. The frequency information may be represented, for example, by a channel number, or may be represented in a different manner without using the channel number.

In S115, the mobile device 9 transmits an Ack back to the BLE module 2 in response to having received the ranging setting notification signal. In response to receiving an Ack from the mobile device 9, in S120, the BLE module 2 transitions to a state where it can receive a signal of the initial frequency, that is, a reception standby state.

In S125, the mobile device 9 starts transmission of CW ranging signal at the initial frequency after a predetermined period has elapsed since transmission of the Ack. The sequential transmission of CW ranging signals can be stopped, for example, after a certain period of time has elapsed since start of the CW ranging signal. The CW transmission period, which is the duration for which the CW ranging signals are successively transmitted, should be set to be shorter than the hopping interval. After receiving the ranging setting notification signal, the mobile device 9 may be configured to start transmission of CW ranging signals under a further condition that a CW ranging transmission request from the BLE module 2 is received.

When the BLE module 2 receives the CW ranging signal from the mobile device 9, in S130, the BLE module 2 detects the received phase and stores the received phase data in the memory 25 together with the corresponding frequency information (for example, channel number). In S140, the BLE module 2 and the mobile device 9 automatically switch the use frequency at the hopping interval agreed upon in advance in S110. The frequency after change can be determined based on the frequency before change and the pre-agreed frequency transition amount.

After the mobile device 9 switches the use frequency, in S145, the mobile device 9 transmits a CW ranging signal having the new use frequency. The BLE module 2 also transitions to a state where the BLE module can receive a signal having new use frequency, by switching the use frequency. In S150, the BLE module 2 observes and acquires the received phase at the frequency after switching.

The BLE module 2 and the mobile device 9 repeat the frequency switching process and the received phase acquisition process described above until they have collected received phases for all frequencies for which received phases should be acquired (for example, all channels available for data communication, that is, 0ch to 36ch). The BLE module 2 and the mobile device 9 may terminate the iterative process when they have collected the received phases for all predetermined required frequencies. The required number here may be the same as the number of data channels, or the required number may be set to larger or smaller than the number of data channels. When the number of frequencies used to collect the received phases increases, the accuracy of distance measurement can be increased, which will be discussed later. When the number of frequencies used to collect the received phases increases, the time required for the ranging communication and the power consumption may increase. The required number may be set to 3, 4, 5, 8, 10, 16, 37, 81, or any other number.

In S160, the BLE module 2 transmits a ranging end notification signal to the mobile device 9 when the BLE module has collected the required number of received phase for each frequency. The ranging end notification signal is a data signal for making a notification that the CW ranging communication is ended. The mobile device 9 switches to a normal data communication mode in response to receiving the ranging end notification signal. The normal data communication mode corresponds to a state in which predetermined data such as audio data can be transmitted and received. Alternatively, transmission and reception of the ranging end notification signal may be properly omitted. The mobile device 9 may be configured to return an Ack to the BLE module 2 in response to receiving of the ranging end notification signal.

In S170, the CS ranging unit F1 calculates a phase change coefficient (α) when collecting of the received phase for each frequency is ended. The phase change coefficient is a parameter indicating a change degree of the received phase according to the change in frequency. The phase change coefficient may also be referred to as a phase change degree, a phase shift amount, or a correlation coefficient between phase and frequency.

The phase shift coefficient is calculated based on the received phases observed at two arbitrary frequencies, for example, a first frequency and a second frequency. Suppose that the frequency difference, which is the difference between the first frequency and the second frequency, is defined as Δf. Suppose that the inter-frequency phase difference, which is the difference between the received phases observed at the first frequency and the received phase observed at the second frequency, is defined as Δφ. The phase change coefficient is defined as α. Then, Δf, Δφ and α satisfy the relationship α = Δφ/Δf. The inter-frequency phase difference (Δφ) is a difference between received phases monitored at two different frequencies. The inter-frequency phase difference can be referred to as a two frequency phase difference or a second-order phase difference. The inter-frequency phase difference corresponds to a displacement amount of a phase angle due to a change in the use frequency.

The CS ranging unit F1 of the present embodiment calculates a regression line showing the relationship between frequency and received phase based on the received phase for each frequency, and adopts the slope of regression line as the phase change coefficient. This is because the slope of regression line indicates the displacement amount of the received phase with respect to the frequency shift amount. The regression line can be calculated using various methods, such as the least squares method. When the regression line is represented in a form of y = ax + b, then the coefficient a of x corresponds to the slope of regression line. In the above equation, "x" is the variable corresponding to frequency, and "y" is the variable corresponding to the received phase. The regression line may also be referred to as an approximate straight line.

The CS ranging unit F1 may temporarily calculate the first regression line based on all of the monitored received phase data, exclude a value (called outlier) at which a distance from the temporarily calculated first regression line is equal to or greater than a predetermined value, and then recalculate the second regression line. In that case, the CS ranging unit F1 may use the slope of the second regression line as the phase change coefficient. As described above, the phase change coefficient used for ranging may be decided based on a regression line having data excluding outliers as a population. According to this configuration, the calculation accuracy of inter-frequency phase difference, and eventually, the distance measurement accuracy can be improved.

The CS ranging unit F1 may also calculate the inter-frequency phase difference (Δφ), the frequency difference (Δf), and the phase change coefficient for each combination of frequencies at which the received phases can be observed. The CS ranging unit F1 may use the average or median value of the phase change coefficients for respective frequency combinations as the phase change coefficient for distance calculation.

In S180, the CS ranging unit F1 calculates the device distance (D) using the phase change coefficient (α) generated based on received phase information at multiple frequencies. When the device distance is D, then the relationship between the frequency difference Δf and the inter-frequency phase difference (Δφ) satisfies D ∝ C·Δφ/(2π·Δf) = C·α/2π. In the above formula, the parameter "C" represents the propagation speed of radio waves (that is, 3 × 10^8 m/sec). The CS ranging unit F1 calculates the device distance based on the above relationship formula. For example, the CS ranging unit F1 can calculate the device distance using formula 1: D = k·C·α / 2π. The parameter k in formula 1 is a design value, and is set to 1.0 or 0.5. The value of parameter k can be decided by whether the transmission or received phase difference is calculated as a one-way phase change coefficient or as a reciprocating phase change coefficient. The CS ranging unit F1 stores the calculated device distance data in the memory 25.

In another embodiment, the CS ranging unit F1 calculates a provisional value (d) of the device distance using Δf and Δφ for each combination of frequencies, and adopts the average or median of the provisional values as the device distance. In this case, the provisional value (d) of the device distance for a given combination of frequencies can be calculated using d = k·C·Δφ/(2π·Δf), etc.

Of the series of process shown in FIG. 6, the process performed by the BLE module 2 is carried out by the cooperation of the CS ranging unit F1 and the RF core 21. In the above example, the BLE module 2 determines and notifies the execution condition for CS ranging communication, but the present disclosure is not limited to this configuration. The mobile device 9, rather than the BLE module 2, may determine the parameters for performing the ranging communication and transmit the ranging setting notification signal. In addition, the execution subject of each process can be properly interchanged. The above sequence may be performed with the mobile device 9 as a main execution subject (in other words, as a master).

The received signal strength acquisition unit F2 is configured to acquire, from the RF core 21, data indicating the strength of received signal which is transmitted from the mobile device 9 for each frequency. The data indicating the strength of received signal corresponds to the position related value of the BLE communication. While the BLE module 2 is in communication connected state with the mobile device 9, the BLE module periodically communicate data signals with the mobile device 9 for connection check purpose. The received signal strength acquisition unit F2 acquires the received signal strength data when the data signal for connection check purpose is received. The communication for connection check purpose can be performed at the connection interval. The communication for connection check may be performed every time channel hopping is performed.

The signal used to detect the received signal strength is not limited to the data signal for connection check. The signal used to detect the received signal strength may be a normal data signal or an advertising signal. The signal used to detect the received signal strength may also be a signal used for CS ranging communication. Hereafter, unless otherwise specified, received signal strength refers to the strength of signal transmitted from the mobile device 9.

The report processing unit F3 transmits, to the main controller, 11 the device distance calculated by the CS ranging unit F1 and the received signal strength data obtained by the received signal strength acquisition unit F2. The transmission of various types of data may be performed periodically. The report processing unit F3 may transmit various types of data based on a request from the main controller 11.

### (Interaction between mobile device 9 and vehicle-mounted system VS)

The following will describe an interaction between the mobile device 9 and the vehicle-mounted system VS. Interaction between the mobile device 9 and the vehicle-mounted system VS takes place after the mobile device 9 has been registered (paired) as the owner device in the vehicle-mounted system VS. First, an example of the owner device registration process for registering (pairing) the mobile device 9 as the owner device in the vehicle-mounted system VS will be described.

In the owner device registration process, when the mobile device 9 is a communication terminal such as a smartphone, the user performs biometric authentication or enters a passcode on the mobile device 9. This allows the owner device registration process to confirm that the mobile device 9 is being operated by the authenticated user.

The user uses the mobile device 9 to request the start of owner device registration process to register the owner device in a management server (not shown). In response to this request, the management server will create a password. The generated password is sent to the mobile device 9 and the vehicle-mounted system VS via wireless communication.

In the vehicle-mounted system VS, when the main switch of the vehicle is turned on, a button to start pairing between the owner device and the vehicle-mounted system VS will be displayed, for example, on the multimedia screen located inside the vehicle. The pairing process begins when the user presses the pairing start button. In this case, the vehicle-mounted system VS may authenticate the user by instructing the user to hold a smart key with a short-range wireless communication function, such as NFC, close to the main switch. Alternatively, the user authentication may be performed by requesting the user to enter a passcode on a multimedia screen to indicate that the user is an authenticated user. The pairing start button may be displayed on the display 95 of the mobile device 9, instead of displaying on the multimedia screen arranged inside the vehicle.

When the pairing start button is operated by the user, an advertising signal is sent from the slave (DK-ECU 1 or mobile device 9) to the central (mobile device 9 or DK-ECU 1) in BLE communication. In BLE communication, the central device receives advertising signals from the slave device. Then, based on the password distributed by the management server, the central device verifies that the communication partner is legitimate and sends a connection request as a response to the advertising signal. In response to the slave device receiving the connection request from the central device, the BLE communication connection is established between the central device and the slave device.

After the BLE communication connection is established between the central device and the slave device, the central device and the slave device generate encryption keys for each other and exchange the encryption keys via the BLE communication. After the validity of exchanged encryption keys is verified, they are stored in a storage medium such as their respective storage devices. After pairing, the data signal of BLE communication is encrypted using the exchanged encryption key. This ensures the security of BLE communication between the DK-ECU 1 and the mobile device 9.

Next, the DK-ECU 1 determines whether the mobile device 9 supports CS ranging communication. This determination method will be explained in detail later. In response to the DK-ECU 1 determining that the mobile device 9 supports CS ranging communication, the DK-ECU 1 correlates the ID of the mobile device 9 (mobile device ID) to the CS support flag, registers and stores the correlated data.

The management server is notified that the mobile device 9 has been registered as the owner device with respect to the vehicle-mounted system VS of the vehicle Hv, and the owner device registration process is completed. After the owner device registration process is completed, the slave device (DK-ECU 1 or mobile device9) in BLE communication starts transmission of an advertising signal. In BLE communication, the central device (mobile device 9 or DK-ECU 1) starts scanning for the corresponding advertising signal. In the following description, suppose that the mobile device 9 is a slave device in BLE communication as an example.

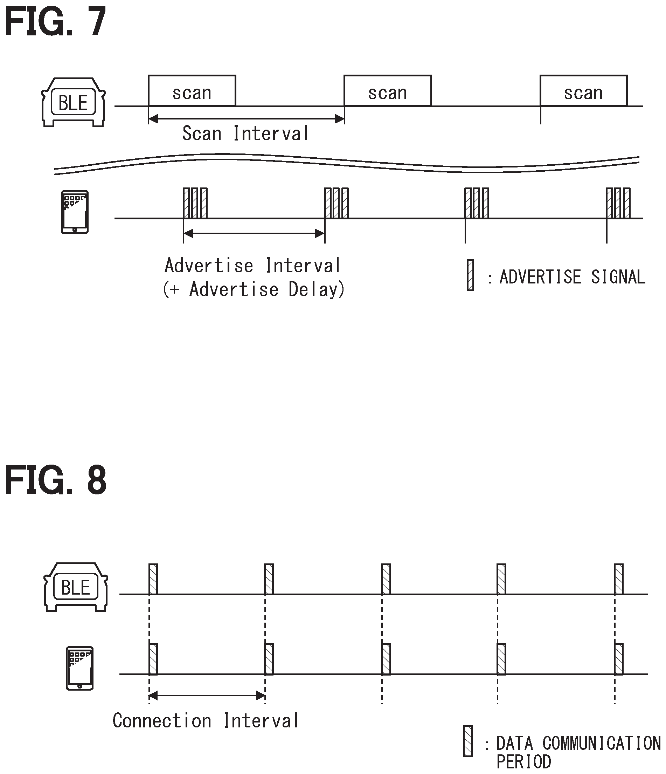

When the mobile device 9 and the vehicle-mounted system VS have not yet established a communication connection, as shown in FIG. 7, the mobile device 9 transmits an advertising signal at a predetermined interval, which is a sum of a predetermined advertising interval and a random duration (referred to as advertising delay). The BLE module 2 of the vehicle-mounted system VS enters a reception standby state at a predetermined scan interval and scans for advertising signal from the mobile device 9. The size of scan window corresponding to the length of duration for maintaining the reception standby state may be appropriately set.

The length of the scan interval and the advertising interval can also be set to various values. The various interval values may be set to allow for a quick connection in response to a user approaching toward the vehicle Hv. The advertising interval may be set to a value between 20 milliseconds and 400 milliseconds, such as 37.5 milliseconds, 50 milliseconds, 80 milliseconds, or 100 milliseconds. The advertising interval may also be set to a value exceeding 400 milliseconds, within the limits of compliance with the BLE standard. The advertising interval may be set to be shorter than the scan interval.

In response to the advertising signal from the mobile device 9, the vehicle-mounted system VS transmits a connection request, thereby establishing a communication connection between the mobile device 9 and the vehicle-mounted system VS. After a communication connection is established between the mobile device 9 and the vehicle-mounted system VS, the BLE module 97 of the mobile device 9 and the BLE module 2 of the vehicle-mounted system VS periodically communicate data via BLE communication at a predetermined connection interval, as shown in FIG. 8. The communication content may be various content such as communication connection check. The connection interval may be set to a value from 7.5 milliseconds to 200 milliseconds, such as 30 milliseconds or 40 milliseconds. The connection interval may also be set to a value exceeding 200 milliseconds within a range conforming to the BLE standard.

After the BLE communication connection is established between the mobile device 9 and the vehicle-mounted system VS, the DK-ECU 1 of vehicle-mounted system VS performs CS ranging communication with the BLE module 97 of the mobile device 9 under a condition that the BLE module 97 of the mobile device 9 supports the CS ranging communication. The method by which the DK-ECU 1 determines whether the BLE module 97 of the mobile device 9 supports CS ranging communication will be described later. The CS ranging communication may be initiated when the received signal strength of the BLE signal becomes equal to or larger than a predetermined strength threshold, or when the distance between the positions detected by GPS receivers falls equal to or shorter than a distance threshold. When any of the above-described conditions for starting CS ranging communication is satisfied, the DK-ECU 1 can transmit a request to start CS ranging to the BLE module 2.

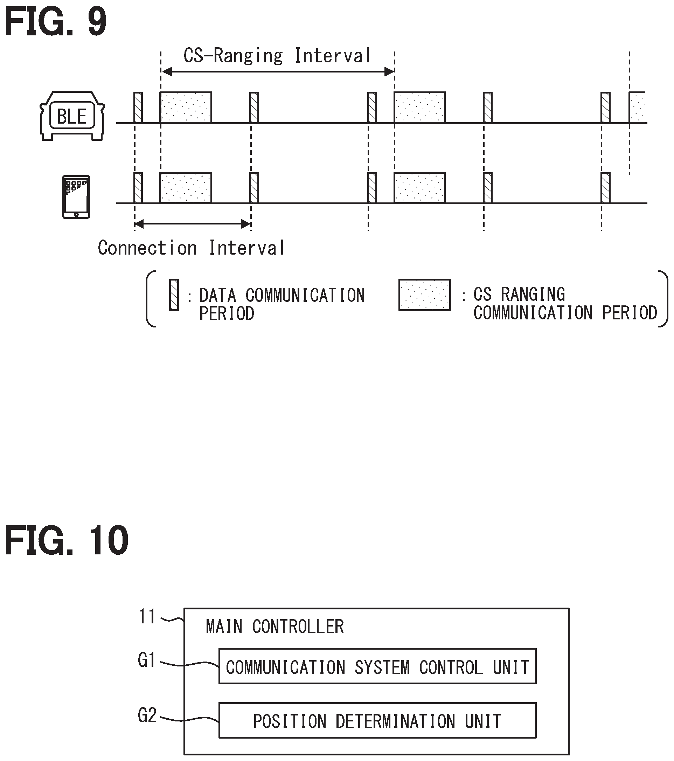

FIG. 9 shows an interaction between the mobile device 9 and the vehicle-mounted system VS when they perform CS ranging communication. The CS ranging interval, which is the interval at which the BLE module 2 performs CS ranging communication, can be set to, for example, twice or three times the connection interval. By setting the CS ranging interval longer than the periodic data communication execution interval, power consumption can be reduced. However, the CS ranging interval may be set the same as the connection interval. Note that CS-Ranging Interval shown in FIG. 9 indicates the CS ranging interval. Multiple CW signals can be communicated on different frequencies in a single CS ranging communication. A single CS ranging communication may be configured to involve communication of a single CW signal on a single frequency. The duration of a single CS ranging communication can be adjusted by factors such as the length of CW signal.

When the mobile device 9 and the vehicle-mounted system VS perform data communication and CS ranging communication via respective BLE modules 2, 97, as shown in FIG. 9, the DK-ECU 1 can perform ranging process based on the received signal strength of the signal for data communication, and also perform the CS ranging by CS ranging communication. When the mobile device 9 does not support CS ranging communication, for example, as shown in FIG. 8, normal data communication is performed between the BLE module 2 and the mobile device 9, and the ranging is performed using the received signal strength of signal for that data communication, and the received signal strength of the data communication is used for ranging according to received signal strength. In this case, the DK-ECU 1 can perform received signal strength ranging using the received signal strength of data communication.

The CS ranging communication may be terminated, for example, when the power of the mobile device 9 is turned off and the BLE communication is disconnected, or when the received signal strength of BLE signal decreases equal to or lower than a predetermined strength threshold. The strength threshold used when terminating CS ranging communication may be the same as or different from the strength threshold used to initiate the CS ranging communication. The CS ranging communication may be terminated when no action is taken on the vehicle for a predetermined period of time after the CS ranging communication has started. The CS ranging communication may be terminated when the user gets into the vehicle Hv and turns on the start switch of the vehicle. When any of the above-mentioned termination conditions for CS ranging communication is satisfied, the DK-ECU 1 can send, to the BLE module 2, a request to terminate the CS ranging.

When the CS ranging communication is terminated in response to the user turning on the start switch, the CS ranging communication may be started again in response to the opening and closing of the door of vehicle Hv. This enables detection of the position for the mobile device 9 via CS ranging communication when the mobile device 9 is taken outside the vehicle while the vehicle is temporarily stopped with the start switch remaining on state.

### (Functions of Main Controller 11)

As shown in FIG. 10, the main controller 11 of the DK-ECU 1 includes a communication system control unit G1 and a position determination unit G2, as functional blocks. The communication control unit G1 is a software or hardware module that controls the operation of the BLE module 2. For example, when the BLE module 97 of the mobile device 9 supports CS ranging communication, the communication control unit G1 causes the BLE module 2 to perform the CS ranging process.

The position determination unit G2 detects the position of the mobile device 9 by determining the device position relative to the vehicle Hv based on the CS ranging result and/or the received signal strength ranging result. The position of the mobile device can be represented by multiple areas/zones predefined in the vehicle Hv, such as the engine start area ESA defined inside the vehicle, the entry area (nearby area) EA defined outside the vehicle, and the intermediate area and remote area that are defined outside the vehicle according to the distance from the vehicle.

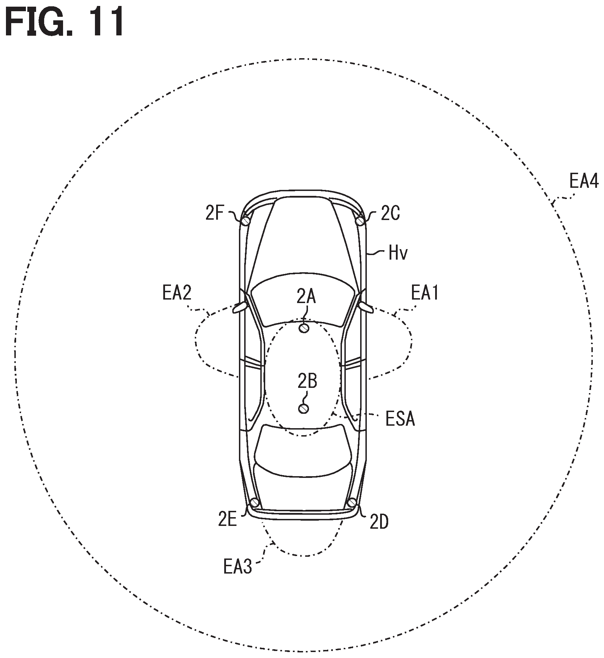

The entry area EA outside the vehicle may include, for example, a first entry area EA1 near the driver seat, a second entry area EA2 near the passenger seat, and a third entry area EA3 near the trunk, as shown in FIG. 11. Thus, the entry area EA refers to, for example, an area outside the vehicle where the distance from the driver seat, passenger seat, and trunk of vehicle Hv is less than a predetermined proximity determination value. The proximity determination value may be set to, for example, 1.0m, 1.5m, or 2m. The entry area EA is an area where the user can unlock/lock the doors, trunk, and other parts of the vehicle Hv. Regarding the unlocking of the vehicle Hv, only the door or trunk corresponding to each entry area may be unlocked, or all doors together with trunk may be unlocked in response to detecting presence of the mobile device 9 in one of the multiple entry areas. Regarding the locking of the vehicle Hv, when the mobile device 9 is present in one entry area and the user holding the mobile device 9 performs the locking operation, all doors and the trunk may be locked.

The remote area refers to an area where the distance from the vehicle Hv is longer than or equal to a predetermined remote determination value (for example, the distance corresponding to an outer edge of area EA4 in FIG. 11). The remote determination value is a parameter used to determine that the mobile device 9 is not located in the vicinity of the vehicle Hv. The remote determination value may be set to, for example, 5.0m, 6.0m, 10m, or 12m. The intermediate area (for example, corresponding to area EA4 in FIG. 11) refers to an area located intermediate between the remote area and the entry area EA. The intermediate area may be referred to as welcome area that performs predetermined welcome control such as turning on vehicle exterior lighting in response to the mobile device 9 entering the intermediate area. The intermediate area may be an area where predetermined control, such as authentication by wireless communication with the mobile device 9, tracking of device position, and shortening of position determination cycle, is executed/started while the predetermined control is not executed when the mobile device 9 is present in the remote area. The intermediate area may also be referred to as a standby area, a peripheral area, or the like. The intermediate area may be an area where user can remotely park/retrieve the vehicle Hv.

The aforementioned entry area EA, the intermediate area, and the remote area are subdivisions of the area outside the vehicle. As shown in FIG. 11, the position determination unit G2 may determine whether the mobile device 9 is located inside the vehicle, such as the engine start area ESA.

As described above, the position determination unit G2 of the present embodiment determines the stay area of the mobile device, that is, the area where the mobile device 9 is located. In another embodiment, the position determination unit G2 may calculate the device position coordinates instead of/in addition to determination of the stay area. The device position coordinates refer to the position coordinates of the mobile device 9 in a two-dimensional/three-dimensional coordinate system with a predetermined portion of the vehicle Hv as the reference. The calculation of device position coordinates can be performed using a method similar to three-point positioning or multi-point positioning in the technical field of GPS and position estimation.

The main controller 11 transmits device position data, which is data indicating the determined device position of mobile device, to a designated ECU such as the body ECU 4. The main controller 11 may periodically update the device position data. The main controller 11 may generate and update the device position data in response to an occurrence of predetermined event.

### (CS ranging communication support determination process executed by mobile device 9)

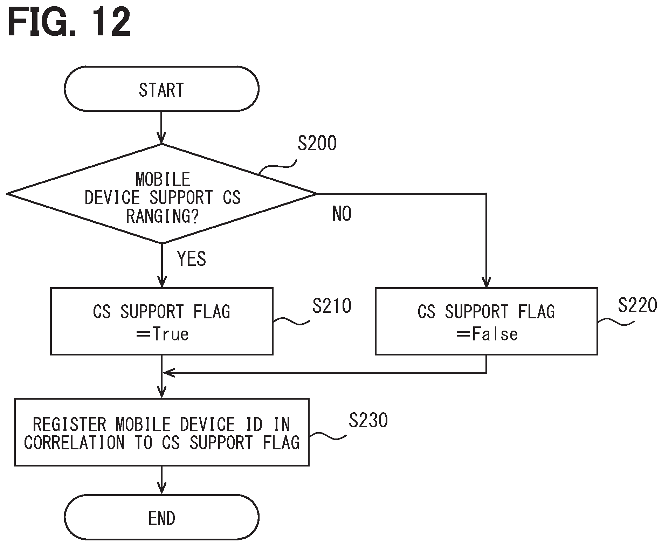

The following will describe a process for determining whether the BLE module 97 of the mobile device 9 supports the CS ranging communication in the vehicle-mounted system VS of the vehicle electronic key system of the present embodiment, with reference to the flowchart in FIG. 12. The process shown in FIG. 12 is executed when the mobile device 9 is the owner device and is registered (paired) with the vehicle-mounted system VS as the owner device.

When the mobile device 9 is registered as an owner device with the vehicle-mounted system VS, the BLE module 97 of the mobile device 9 and the BLE module 2 of the vehicle-mounted system VS exchange various information, including identification information (mobile device ID) of each other. In information exchange, for example, information indicating the wireless communication methods supported by the vehicle-mounted system VS can be transmitted to the mobile device 9, or conversely, information indicating the wireless communication methods supported by the mobile device 9 can be transmitted to the vehicle-mounted system VS. By including information indicating whether the mobile device 9 supports CS ranging communication in the information indicating the wireless communication methods supported by the mobile device, the vehicle-mounted system VS can determine whether the mobile device 9 supports CS ranging communication based on the received information indicating the wireless communication method the mobile device 9 supports.

Alternatively, in the above-described information exchange between the mobile device 9 and the vehicle-mounted system VS can, for example, the vehicle-mounted system VS may transmit an inquiry to the mobile device 9 about the settings related to CS ranging communication. In response to the inquiry from the vehicle-mounted system VS, if the mobile device 9 transmits a reply including setting values about CS ranging communication, the vehicle-mounted system VS can determine that the mobile device 9 supports CS ranging communication. When the mobile device 9 does not reply to the inquiry from the vehicle-mounted system VS, or a response from the mobile device 9 indicates that the mobile device 9 does not support CS ranging communication, the vehicle-mounted system VS can determine that the mobile device 9 does not support CS ranging communication.

The confirmation of whether the mobile device 9 supports CS ranging communication may be performed each time the DK-ECU 1 and the mobile device 9 initiate the BLE communication, rather than when the mobile device 9 is registered as the owner device.

In S200 of the flowchart in FIG. 12, the DK-ECU 1 of the vehicle-mounted system VS determines whether the mobile device 9 supports CS ranging communication based on the information received from the mobile device 9 regarding the wireless communication method supported by the mobile device 9, or the response corresponding to the inquiry of setting values related to CS ranging communication. In a case where the mobile device 9 is set as the master device, the mobile device 9 will determine whether the BLE module 2 of the vehicle-mounted system VS supports CS ranging communication. In response to the CS ranging communication being supported by the mobile device, the DK-ECU 1 proceeds to S210 and sets the CS support flag to "True" to indicate that CS ranging communication is supported by the mobile device. In response to the CS ranging communication being not supported by the mobile device, the DK-ECU 1 proceeds to S220 and sets the CS support flag to "False" to indicate that CS ranging communication is not supported by the mobile device.

In S230, the DK-ECU 1 correlates the ID of the mobile device 9 (mobile device ID) to the CS support flag set in S210 or S220, and registers and stores the correlated information in a secure storage medium, such as the storage 14.

### (Process for detecting position of mobile device 9)

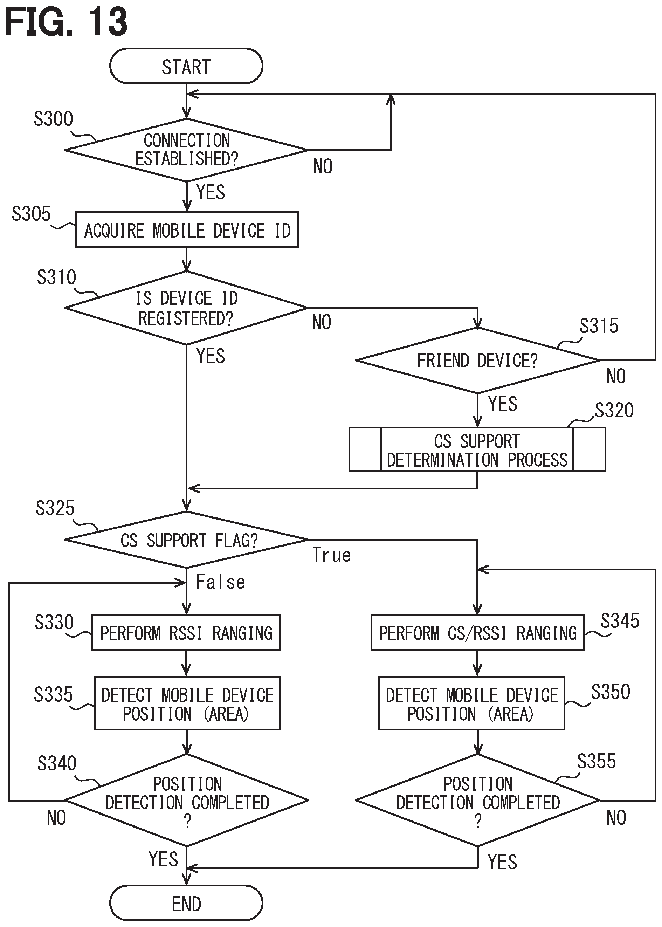

The following will describe a process for detecting the position of mobile device 9, which is performed in the vehicle-mounted system VS of the vehicle electronic key system using the BLE module 2, with reference to the flowchart in FIG. 13.

In S300, the BLE controller 23 or the DK-ECU 1 determines whether a communication connection with the mobile device 9 has been established. When a communication connection with the mobile device 9 has been established, the DK-ECU 1 proceeds to S305 and acquires the ID of the mobile device 9 (mobile device ID) from the BLE signal used to establish the communication connection with the mobile device 9.

In S310, the DK-ECU 1 determines whether the acquired mobile device ID is already registered. As mentioned above, when the mobile device is registered as the owner device, the mobile device ID is already registered. Therefore, in response to determining that acquired mobile device ID is already registered, the DK-ECU 1 determines YES in S310 and proceeds to S325. In response to determining that acquired mobile device ID is not registered, the DK-ECU 1 determines NO in S310 and proceeds to S315.

In S315, in order to establish a communication connection, the DK-ECU 1 determines based on the BLE signal communicated with the mobile device 9 whether the mobile device 9 is a friend device authorized by the user to access and use the vehicle Hv. Herein, the user indicates the owner of the owner device.

The mobile device 9 set as the friend device can, in advance, acquire and store information (for example, an attestation package including IRK) indicating that own device is a friend device that has been granted vehicle access right and usage right from the owner device, that is, the mobile device 9, via the management server. Therefore, when the mobile device 9, which is registered as a friend device, approaches the vehicle Hv, it becomes possible to establish a communication connection with the vehicle-mounted system VS and the mobile device 9 by using the stored information to send a connection request back in response to the advertising signal.

Once the BLE communication connection is established between the mobile device 9 (friend device) and the vehicle-mounted system VS, the vehicle-mounted system VS confirms the attestation package held by the mobile device 9. This allows the vehicle-mounted system VS to determine that the mobile device 9, with which a communication connection has been established, is a friend device. Then, similar to the owner device registration process, the vehicle-mounted system and mobile device each generates an encryption key for each other and exchanges the encryption key via BLE communication. After the authenticity of exchanged encryption key is verified on each side, the keys are stored in a storage medium such as respective storage devices.

The DK-ECU 1 may, in response to an instruction from the user of owner device, perform V2X communication with the management server that registers the ID, authorized privileges, and usage period of the friend device (mobile device 9), acquire the registration information. Based on the acquired registration information, the DK-ECU 1 may determine whether the mobile device 9 with which it has established a communication connection is a friend device.

In response to the DK-ECU 1 determining that the mobile device 9 is a friend device, the process proceeds to S320. In response to the DK-ECU 1 determining that the mobile device 9 is not a friend device, the DK-ECU 1 disconnects the established communication connection and returns to S300.

In S320, the DK-ECU 1 performs BLE communication with the mobile device 9, which is a friend device, in order to obtain information indicating whether the mobile device 9 supports CS ranging communication. Information indicating whether a device supports CS ranging communication can be obtained using the same method performed for the owner device as described above. Regarding the friend device, once the friend device is determined whether or not the friend device supports the CS ranging communication, the DK-ECU 1 registers and saves the ID of the mobile device 9 (mobile device ID) and the set CS support flag, similar to the process executed for the owner device. In this way, the DK-ECU 1 registers (pairs) the mobile device 9, which is a friend device. Therefore, when the mobile device 9, which is a friend device, approaches the vehicle Hv for the second time or later, the DK-ECU 1 can determine whether or not the mobile device 9 supports CS ranging communication based on the mobile device ID and CS support flag, which are registered in correlated manner.

In S325, the DK-ECU 1 determines the CS support flag of the mobile device 9, with which the communication connection is established. When the CS support flag is false and the CS ranging communication is not supported, the DK-ECU 1 proceeds to S330. When the CS support flag is true and the CS ranging communication is supported, the DK-ECU 1 proceeds to S345.

In S330, the DK-ECU 1 performs a ranging based on the received signal strength of the data signals transmitted to and from the mobile device 9. In the present embodiment, as shown in FIG. 4 and FIG. 11, multiple anchors (BLE modules) 2A to 2F are arranged inside and outside the vehicle Hv. Therefore, based on the received signal strength at each anchor 2A to 2F, the approximate device distance between each anchor 2A to 2F and the mobile device 9 can be determined. Therefore, in S335, the DK-ECU 1 can detect the approximate position (area) of the mobile device 9 from the device distance calculated with respect to the multiple anchors 2A to 2F.

In S345, the DK-ECU 1 performs CS ranging by sending and receiving CS ranging signals to and from the mobile device 9. In this case, the DK-ECU 1 may also perform ranging based on the received signal strength of the BLE signal. This is because, in addition to the CS ranging, ranging using the received signal strength can be performed to improve the accuracy of position detection for the mobile device 9. For example, by periodically performing CS ranging and ranging using received signal strength, the DK-ECU 1 is able to determine that the mobile device 9 is inside the vehicle when (i) the received signal strength is equal to or greater than a strength threshold indicating that the mobile device 9 is inside the vehicle, and (ii) the CS ranging result indicates that the mobile device 9 is inside the vehicle (for example, within 1 m from the BLE module 2 arranged inside the vehicle). Alternatively, the DK-ECU 1 may be configured to perform only CS ranging without performing the receive signal strength ranging. As mentioned above, the CS ranging calculates the device distance based on the received phase of CW ranging signal, allowing for more accurate device distance calculations than ranging based on received signal strength. Therefore, in S350, the DK-ECU 1 can detect the position (area) of the mobile device 9 with a higher accuracy based on the device distance calculated by CS ranging with respect to multiple anchors 2A to 2F.

After the DK-ECU 1 detects the position of the mobile device 9, the DK-ECU 1 transmits the detected position data of the mobile device 9 to the body ECU4. The body ECU 4 can perform a predetermined vehicle control based on the position data of the mobile device 9, which is provided by the DK-ECU 1. For example, the vehicle control may be unlocking/locking of the vehicle Hv, turning on the power, or the like

In S340 and S355 of the flowchart in FIG. 13, the DK-ECU 1 determines whether the position detection of the mobile device 9 is completed. For example, the DK-ECU 1 may determine that the position detection of the mobile device 9 is completed when the vehicle Hv stops, the occupant disembark, the vehicle Hv is locked, the mobile device 9 moves away from the vehicle, and position detection of the mobile device 9 becomes impossible. When the position detection of the mobile device 9 is not yet completed, the DK-ECU 1 returns to S330 or S345 and repeats the process described above. This allows for the repetitive (periodic) execution of ranging based on received signal strength or CS ranging.

### (Second Embodiment)

### (Overview of the vehicle electronic key system according to second embodiment)

The following will describe a position detection system, a position detection method, and a vehicle electronic key system to which a computer is applied according to a second embodiment of the present disclosure.

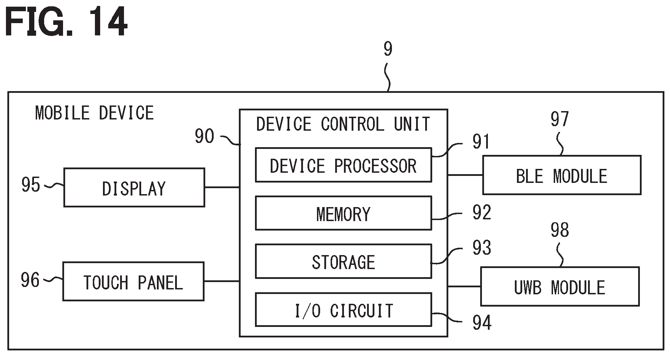

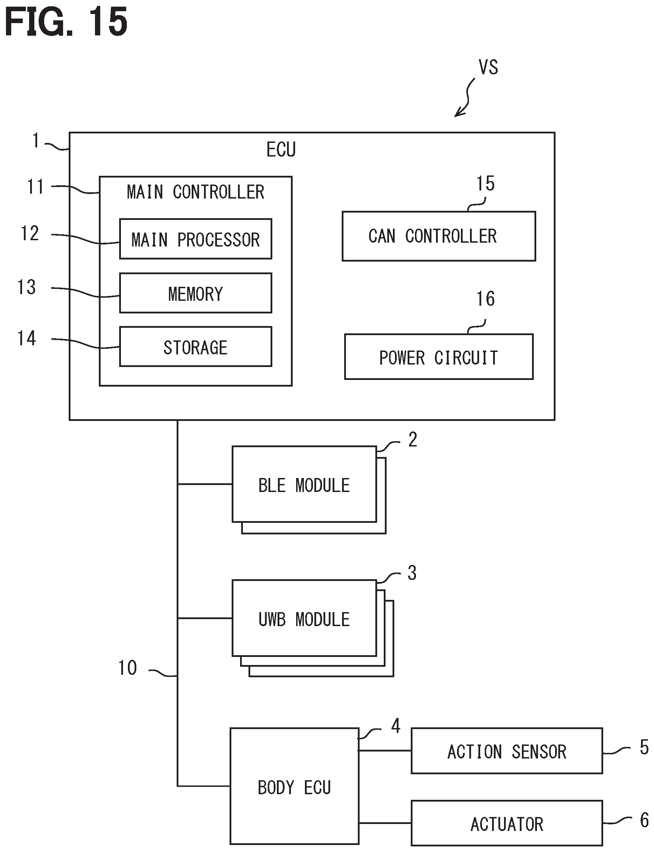

FIG. 14 is a block diagram showing a configuration of a mobile device 9 according to the present embodiment. As shown in FIG. 14, the mobile device 9 according to the present embodiment includes a UWB module 98 in addition to the mobile device 9 according to the first embodiment. The UWB module is capable of performing UWB communication, which corresponds to a third communication method. FIG. 15 is a block diagram showing a configuration of a vehicle-mounted system VS according to the present embodiment. As shown in FIG. 15, the vehicle-mounted system VS according to the present embodiment includes multiple UWB modules 3 each capable of performing UWB communication, in addition to the vehicle-mounted system VS according to the first embodiment.

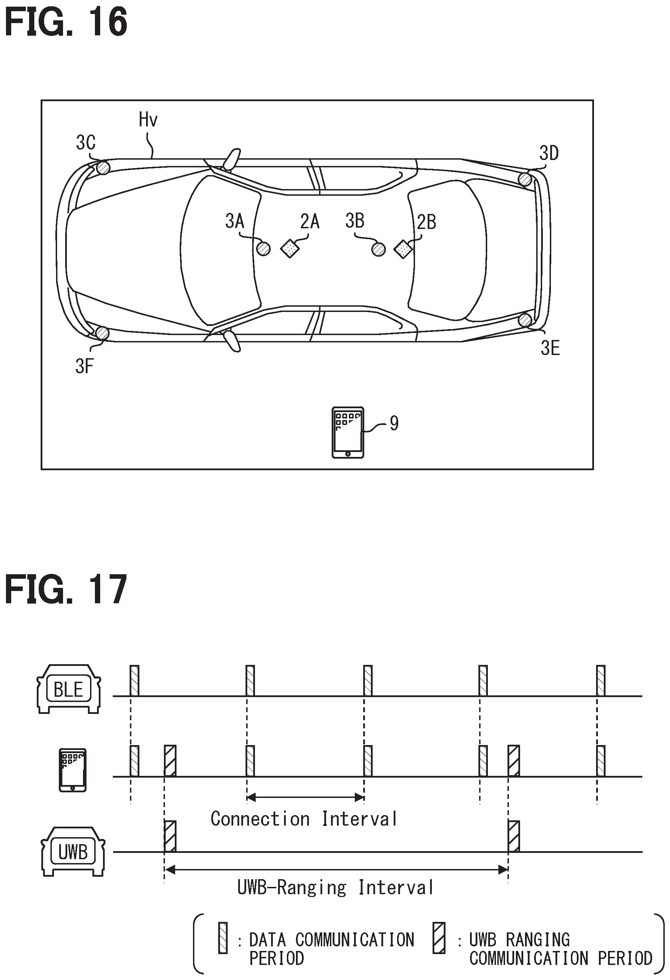

FIG. 16 shows an arrangement example of the of the BLE module 2 and UWB modules 3 relative to the vehicle Hv according to the present embodiment. The BLE module 2 according to the present embodiment is capable of performing BLECS communication in addition to BLE communication. In the example shown in FIG. 16, anchors 2A and 2B of the BLE module 2 are located at the front inside area and rear inside area of the vehicle, respectively. Therefore, even if the ranging based on received signal strength or CS ranging is performed by performing BLE communication or BLECS communication, the exact position of the mobile device 9 cannot be determined, and only the area to which the mobile device 9 belongs can be roughly detected.

In the example shown in FIG. 16, the anchors 3A to 3F of the UWB module 3 are located in the front inside area of the vehicle, in the rear inside area of the vehicle, on the front right portion of the vehicle, on the rear right portion of the vehicle, on the rear left portion of the vehicle, and on the front left portion of the vehicle, respectively. Therefore, when the device distance between at least three UWB modules 3 and the mobile device 9 is calculated by performing UWB communication, the exact position of the mobile device 9 can be detected with high accuracy.

Thus, when the mobile device 9 supports UWB ranging communication, the vehicle-mounted system VS and the mobile device 9 according to the present embodiment are configured to perform UWB communication, which is a wireless communication using the UWB-IR (Ultra Wide Band - Impulse Radio) method, via the respective UWB modules 3 and 98. Specifically, the vehicle-mounted system VS and the mobile device 9 are configured to transmit and receive impulse-like radio waves (hereinafter referred to as impulse signals) used in UWB communication via respective UWB modules 3 and 98. The impulse signal used in the UWB communication has a pulse width of an extremely short time (for example, 2 nanoseconds) and has a bandwidth of 500 MHz or more (that is, an ultra wide bandwidth).

In UWB communication, multiple channels may be used, as defined in IEEE 802.15.4z. The vehicle-mounted system VS can communicate with the mobile device 9, for example, using the fifth channel of UWB communication. Of course, the vehicle-mounted system VS can be configured to communicate with the mobile device 9 using other channels, such as the third channel or the ninth channel. The third channel has a center frequency of 4492 MHz, the fifth channel has a center frequency of 6489.6 MHz, and the ninth channel has a center frequency of 7987.2 MHz. IEEE (registered trademark) stands for Institute of Electrical and Electronics Engineers, and refers to the American Institute of Electrical and Electronics Engineers. Each channel corresponds to a frequency band of ±250 MHz from the center frequency. The UWB communication may use frequencies such as 3.1 GHz to 4.8 GHz, and 6.0 GHz to 10.6 GHz.

A variety of modulation methods can be used for UWB communication, including on-off keying (OOK), pulse position modulation (PPM), and pulse width modulation (PWM). The on-off modulation is a method of representing information (for example, 0 and 1) based on the presence or absence of an impulse signal. The pulse position modulation method is a method of performing modulation at a pulse generation position. The pulse width modulation method is a method of expressing information by a pulse width. In this example, UWB communication between the vehicle-mounted system VS and the mobile device 9 is performed using the OOK method. Data transmission via UWB communication can be achieved using multiple impulse signals. Hereafter, data signals exchanged via UWB communication will be referred to as UWB signals. Because UWB signals contain multiple impulse signals, they can also be referred to as pulse sequence signals.

The UWB modules 3 and 98 each is a communication module for performing UWB communication. The UWB modules 3 and 98 output the received data to the DK-ECU 1 and the device control unit 90, respectively. The UWB modules 3 and 98 transmit UWB signals corresponding to the data to be transmitted based on instructions from the DK-ECU 1 and the device control unit 90, respectively. The UWB modules 3 and 98 can also transmit and receive UWB signals for ranging purpose based on instructions from the DK-ECU 1 and the device control unit 90, respectively. Thus, the operations of the UWB modules 3 and 98 are controlled by the DK-ECU 1 and the device control unit 90, respectively.

For example, when the DK-ECU 1 performs UWB communication with the mobile device 9, the DK-ECU can instruct any UWB module 3 to transmit a UWB signal. When the device control unit 90 receives a UWB signal transmitted from the vehicle-mounted system VS via the UWB module 98, the device control unit transmits a response signal corresponding to the received signal via the UWB module 98. For example, when the device control unit 90 receives a UWB signal as a search signal, the device control unit can return a UWB signal modulated with a code including the device ID of the mobile device 9 to the vehicle-mounted system VS as the response signal. The search signal is a signal for the vehicle-mounted system VS to search for the mobile device 9, and is a type of signal requesting the mobile device 9 to return the response signal. The UWB signal transmitted by the mobile device 9 may include a code indicating the source or destination of transmission, and the UWB signal transmitted by the vehicle-mounted system VS may include a code indicating the source or destination of transmission.

When the BLE communication connection is not established, the DK-ECU 1 and the device control unit 90 may stop the operations of the UWB modules 3 and 98 and, for example, set the UWB modules as sleep states. For example, the device control unit 90 may activate the UWB module 98 in response to the establishment of BLE communication connection with the vehicle-mounted system VS, thereby enabling UWB communication. This configuration can reduce the power consumption of the UWB module 98. The device control unit 90 may be configured to, after establishing the BLE communication connection with the vehicle-mounted system VS, start the UWB module 98 under a condition that a UWB ranging start request from the DK-ECU 1 is received via the BLE communication.

The DK-ECU 1 can instruct the UWB module 3 to execute UWB ranging process, which includes UWB communication for ranging purpose. For example, the DK-ECU 1 can perform a cyclic measurement process that instructs each of the multiple UWB modules 3 to perform UWB ranging process in sequence. The DK-ECU 1 can periodically perform cyclic measurement process after a BLE communication connection is established between the vehicle Hv and the mobile device 9. The DK-ECU 1 may determine the start timing of the cyclic measurement process or dynamically change the cyclic measurement interval, depending on the value of the received signal strength of the BLE signal observed within an immediate recent predetermined time period. Alternatively, the DK-ECU 1 may perform the cyclic measurement process in response to detection of predetermined event that requires the position of the mobile device 9 to be detected. The UWB ranging process described above measures the distance from each UWB module 3 to the mobile device 9, and the position of the mobile device 9 is detected based on the distances that are measured. Each UWB module 3 is also referred to as an anchor.

Each UWB module 98 is equipped with an antenna for UWB communication, a transceiving circuit, a UWB controller, and the like. The transceiving circuit is configured to perform a signal processing related to modulation and demodulation. The UWB controller is a microcomputer that controls the operation of the UWB module 3, 98 and generates the UWB ranging data to be described below.

Each UWB module 3 performs UWB ranging process based on an instruction from the DK-ECU 1. The UWB ranging process includes acquiring the radio wave propagation time (in other words, flight time) from each UWB module 3 to the mobile device 9 as a position related value of UWB communication, and measuring the device distance based on the acquired radio wave propagation time. The UWB ranging process includes, as the UWB communication for ranging purpose, transmitting a predetermined pattern of UWB signal to the mobile device 9 and receiving a UWB signal as a response signal from the mobile device 9. In the UWB ranging process, the UWB signal exchanged between the UWB module 3 and the mobile device 9 may be a single impulse signal, or a pulse sequence signal in which multiple impulse signals are arranged in a predetermined pattern.

The UWB controller of each UWB module 3 measures the round-trip time (RTT), which is the elapsed time from transmission of a UWB signal to receiving of a response signal from the mobile device 9, and calculates the device distance based on the RTT. The position related value of UWB communication is the time of flight by which the communication signal communicated between the UWB module 3 and the mobile device 9. The RTT corresponds to the round-trip flight time of UWB signal. In the present embodiment, the UWB controller may calculate the device distance by multiplying half of the value obtained by subtracting a predetermined correction value from the RTT by the radio wave propagation time. The correction value here is a parameter used to offset the response processing time in the mobile device 9 and the delay time in the UWB module 3. A specific value of the correction value can be appropriately set. Each UWB module 3 transmits the calculated device distance to the DK-ECU 1 as the UWB ranging data. The UWB module 3, which has performed the UWB ranging process, stops operation either in self-control manner or based on an instruction from the DK-ECU 1. The main controller 11 of the DK-ECU 1 may be configured to perform the process for converting RTT to distance.

### (Interaction between vehicle-mounted system VS and mobile device 9 when performing UWB communication)

FIG. 17 shows an example of interaction between the mobile device 9 and the vehicle-mounted system VS when they perform UWB ranging communication. When the mobile device 9 supports UWB ranging communication and the mobile device 9 is registered (paired) as an owner device or a friend device in the vehicle-mounted system VS, the following process is executed in addition to the process described in the first embodiment.

For example, after exchanging encryption keys for BLE communication, the mobile device 9 and the vehicle-mounted system VS each generates a URSK (UWB Ranging Secret Key), which is a key used for UWB ranging communication, and shares the generated URSK via BLE communication. The URSK can be used to create information that proves the communication partner in UWB ranging communication is the authenticated communication partner. By having the generated URSK codes exchanged between the DK-ECU 1 and the mobile device 9, the DK-ECU 1 can perform UWB ranging communication with the mobile device 9 as the communication partner.

The DK-ECU 1 registers and saves the generated URSK by associating the URSK with the ID of mobile device 9 (mobile device ID). The DK-ECU 1 may confirm that the UWB ranging communication with the mobile device 9 is possible by actually performing the UWB ranging using the generated URSK.

As shown in FIG. 17, the vehicle-mounted system VS periodically performs data communication using BLE and ranging communication using UWB with the mobile device 9. The UWB ranging interval, which is the interval at which the DK-ECU 1 causes the UWB module 3 to perform UWB ranging communication, can be set to three or four times the connection interval. By increasing the UWB ranging interval in this way, power consumption can be reduced. However, the CS ranging interval may be set the same as the connection interval.

Note that UWB-Ranging Interval in FIG. 17 indicates the UWB ranging interval. A single UWB ranging communication may include multiple UWB ranging communications from respective UWB modules 3. The UWB ranging interval can be set to a value between 150 milliseconds and 400 milliseconds, for example, 180 milliseconds or 280 milliseconds. The UWB ranging interval may be set to be longer than the CS ranging interval. The UWB ranging interval may be set the same as or shorter than the CS ranging interval.

The position detection of the mobile device using the UWB signal (UWB ranging) described above may be initiated when the received signal strength of the BLE signal becomes equal to or larger than a predetermined strength threshold, or when the distance between the positions detected by GPS receivers falls equal to or shorter than a distance threshold. With this configuration, power consumption can be further reduced.

When any of the above-described conditions for starting UWB ranging communication is satisfied, the DK-ECU 1 can transmit a request to start UWB ranging to the multiple UWB modules 3. In response to the UWB ranging start request, multiple UWB modules 3 each transitions from a sleep state to a wake-up state. Then, the multiple UWB modules 3 transmit UWB ranging signals. In other words, each of the multiple UWB modules 3 is in a sleep state while the UWB ranging is not being performed.

Similar to CS ranging communication, the UWB ranging communication may be terminated, for example, when the power of the mobile device 9 is turned off and the BLE communication is disconnected, or when the received signal strength of BLE signal decreases equal to or lower than a predetermined strength threshold. The strength threshold used when terminating UWB ranging communication may be the same as or different from the strength threshold used to initiate the UWB ranging communication. The UWB ranging communication may be terminated when no action is taken on the vehicle for a predetermined period of time after the UWB ranging communication has started. The UWB ranging communication may be terminated when the user gets into the vehicle Hv and turns on the start switch of the vehicle.

When any of the above-described conditions for ending UWB ranging communication is satisfied, the DK-ECU 1 can transmit a request to end UWB ranging to the multiple UWB modules 3. In response to this end request, multiple UWB modules 3 each ends the UWB ranging communication. After the multiple UWB modules 3 end the UWB ranging communication, if a new request to start UWB ranging is not received within a predetermined period, the UWB modules 3 may be configured to enter sleep states.

After the UWB ranging communication is terminated in response to the user turning on the start switch, the UWB ranging communication may be started again in response to the opening and closing of the door of vehicle Hv. This enables detection of the user operation that the mobile device 9 has been taken outside the vehicle while the vehicle is temporarily stopped remaining the start switch in turned on state, by the UWB ranging communication,

### (CS ranging communication support determination process and UWB ranging communication support determination process executed by mobile device 9)

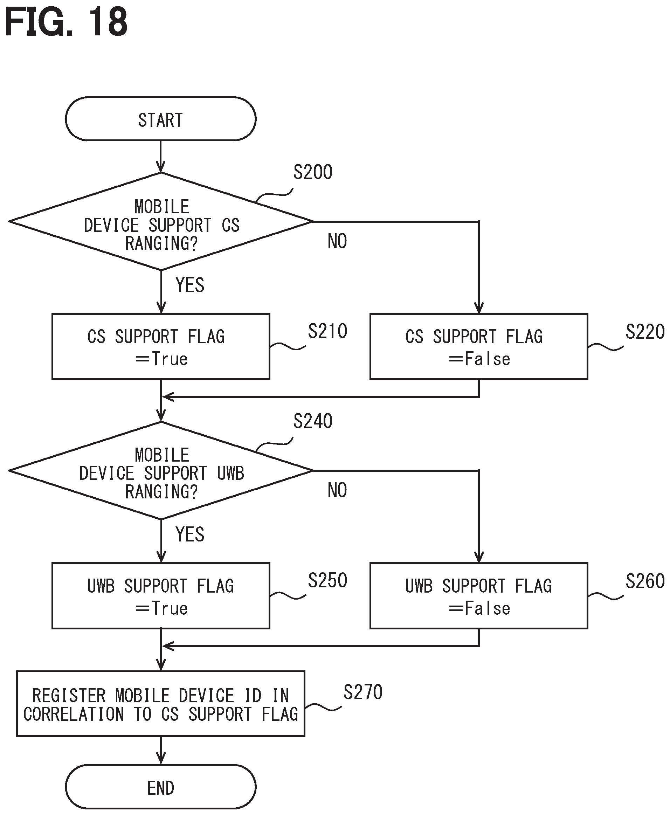

The following will describe a process for determining whether the BLE module 97 of the mobile device 9 supports the CS ranging communication and the UWB ranging communication in the vehicle-mounted system VS of the vehicle electronic key system of the present embodiment, with reference to the flowchart in FIG. 18. Similar to the process shown in FIG. 12, the process shown in FIG. 18 is executed when the mobile device 9 is the owner device and is registered (paired) with the vehicle-mounted system VS as the owner device.

The process executed in S200 to S220 in the flowchart of FIG. 18 is the same as the process executed in S200 to S220 in the flowchart of FIG. 12, and the detailed description thereof will be omitted. In S240, the DK-ECU 1 of the vehicle-mounted system VS determines whether the mobile device 9 supports UWB ranging communication. The determination can be made based on information received from the mobile device 9, which indicates the wireless communication method supported by the mobile device 9. The determination may also be made based on the response result from the mobile device 9 to an inquiry about setting values related to UWB ranging communication. The determination in S240 may be executed in similar manner to the determination of whether the mobile device 9 supports CS ranging communication. In response to determining that UWB ranging communication is supported, the DK-ECU 1 proceeds to S250 and sets the UWB support flag to true to indicate that UWB ranging communication is supported. On the other hand, in response to determining that UWB ranging communication is not supported, the DK-ECU 1 proceeds to S260 and sets the UWB support flag to false to indicate that UWB ranging communication is not supported.

In S270, the DK-ECU 1 correlates the ID of mobile device 9 (mobile device ID) to the CS support flag set in S210 or S220 and also to the UWB support flag set in S250 or S260, and registers and stores the correlated information in a secure storage medium, such as the storage 14. In this case, when the mobile device 9 supports UWB ranging communication, the aforementioned URSK is also saved together with the correlated information.

### (Process for detecting position of mobile device)

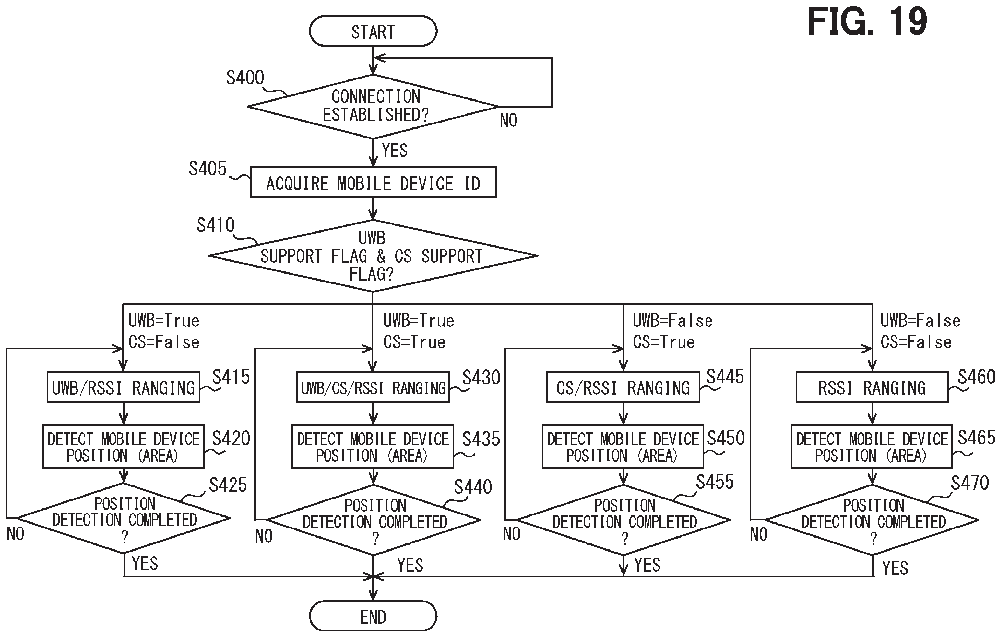

The following will describe a process for detecting the position of mobile device 9, which is performed in the vehicle-mounted system VS of the vehicle electronic key system with reference to the flowchart shown in FIG. 19.

The process executed in S400 and S405 of the flowchart in FIG. 19 is the same as the process executed in S300 and S305 of the flowchart in FIG. 13, and the detailed description thereof will be omitted. Although the process executed in S310 to S320 of the flowchart in FIG. 12 is omitted in the flowchart shown in FIG. 19, the same process may also be executed in the flowchart shown in FIG. 19.

In S410, the DK-ECU 1 determines the CS support flag and UWB support flag of the mobile device 9, with which a communication connection has been established. When the UWB support flag is "True" and the CS support flag is "False", the DK-ECU 1 proceeds to S415. When the UWB support flag is "True" and the CS support flag is "True", the DK-ECU 1 proceeds to S430. When the UWB support flag is "False" and the CS support flag is "True", the DK-ECU 1 proceeds to S445. When the UWB support flag is "False" and the CS support flag is "False", the DK-ECU 1 proceeds to S460.

In S415, the DK-ECU 1 performs UWB ranging by sending and receiving UWB ranging signals to and from the mobile device 9. In this case, the DK-ECU 1 may perform ranging based on received signal strength of the BLE signal (RSSI ranging). By performing RSSI ranging in addition to UWB ranging, it is possible to improve the detection accuracy of position, that is, distance to the mobile device 9 and reduce power consumption. For example, when the position of the mobile device 9 is determined to be in a remote area, RSSI ranging may be performed. When the position of the mobile device 9 is in an intermediate or nearby area, UWB ranging may be performed to detect the position more accurately. The RSSI ranging may also be performed when the position of the mobile device 9 is determined to be in the intermediate area or nearby area. In S420, the DK-ECU 1 can detect the position (area) of the mobile device 9 with high accuracy from the device distances calculated for multiple anchors 3A to 3F that perform UWB ranging.

In S430, the DK-ECU 1 performs UWB ranging by sending and receiving UWB ranging signals to and from the mobile device 9. The DK-ECU 1 performs CS ranging by sending and receiving CS ranging signals to and from the mobile device 9. In this case, the DK-ECU 1 may perform ranging based on received signal strength of the BLE signal (RSSI ranging). For example, the DK-ECU 1 may perform UWB ranging and CS ranging simultaneously. In this case, the DK-ECU 1 may detect the position (area) of the mobile device 9 by multilateration measuring method based on the device distance measured by UWB ranging and the device distance measured by CS ranging. Alternatively, the DK-ECU 1 may separately calculate the position of mobile device 9 calculated based on the device distance measured by UWB ranging and the position of mobile device 9 calculated based on the device distance measured by CS ranging, and then detect the final position (area) of the mobile device 9 from the two separately calculated mobile device positions. When detecting the final position (area) of the mobile device 9, the results of the received signal strength measurement may also be taken into consideration.

Alternatively, the DK-ECU 1 may not always perform multiple ranging methods simultaneously, but may use different methods depending on the position (area) of the mobile device 9 and the moving speed of the mobile device 9. The following will describe an example of using different ranging methods depending on the position (area) of the mobile device 9, and an example of using different ranging methods considering the moving speed of the mobile device 9.

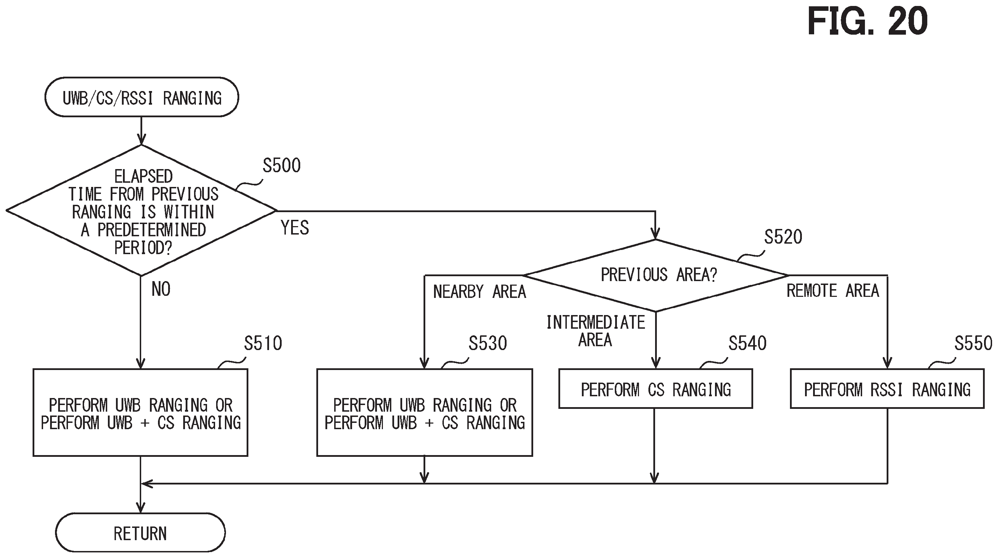

FIG. 20 shows an example of a process that uses different ranging methods depending on the position (area) of the mobile device 9. The flowchart shown in FIG. 20 shows a detail of the process executed in S430 shown in FIG. 19.

In S500, the DK-ECU 1 performs ranging process to detect the position (area) of mobile device 9, and then determines whether a certain time period has elapsed from the execution of ranging process. When the DK-ECU 1 determines that a certain time period has elapsed, the position of the mobile device 9 may have changed significantly from the position (area) detected based on the previous ranging process. Therefore, the DK-ECU 1 proceeds to S510 to detect the exact position of the mobile device 9. When the DK-ECU 1 determines that the certain time period has not elapsed, it can be considered that the position of the mobile device 9 has not changed significantly from the position (area) detected based on the previous ranging process. Then, the DK-ECU 1 proceeds to S520.

In S510, the DK-ECU 1 instructs the UWB module 3 to perform UWB ranging, or simultaneously instructs the UWB module 3 to perform UWB ranging and instructs the BLE module 2 to perform CS ranging. By performing UWB ranging, or by performing UWB ranging and CS ranging simultaneously, the DK-ECU 1 can detect the precise position (area) of the mobile device 9 in S435 of the flowchart in FIG. 19.

In S520, the DK-ECU 1 determines whether the previously detected position of the mobile device 9 belonged to the nearby area (entry area), the intermediate area, or the remote area. When the previous area is determined to be a nearby area, the DK-ECU 1 proceeds to S530. When the previous area is determined to be an intermediate area, the DK-ECU 1 proceeds to S540. When the previous area is determined to be a remote area, the DK-ECU 1 proceeds to S550.

In S530, similar to S510, the DK-ECU 1 instructs the UWB module 3 to perform UWB ranging, or simultaneously instructs the UWB module 3 to perform UWB ranging and instructs the BLE module 2 to perform CS ranging. In other words, in response to determining that the position of the mobile device 9 belongs to a nearby area, multiple different communication methods may be selected, and position related values may be obtained using the selected multiple different communication methods. This configuration enables to detect the position (area) of the mobile device 9 located near the vehicle Hv with high accuracy.

In S540, the DK-ECU 1 instructs the BLE module 2 to perform CS ranging. This configuration enables to detect the position (area) of the mobile device 9 located in the intermediate area with a certain degree of accuracy, while saving power consumption. In S550, the DK-ECU 1 performs RSSI ranging based on the received signal strength of BLE data signal. This configuration enables to detect the approximate position of the mobile device 9 located in a remote area while saving power consumption and ensuring responsiveness of position detection. Thus, when the position of the mobile device 9 does not belong to the nearby area but to the intermediate or remote area, fewer communication methods may be selected compared when the mobile device belongs to the nearby area, and position related values may be obtained using the selected multiple communication methods.

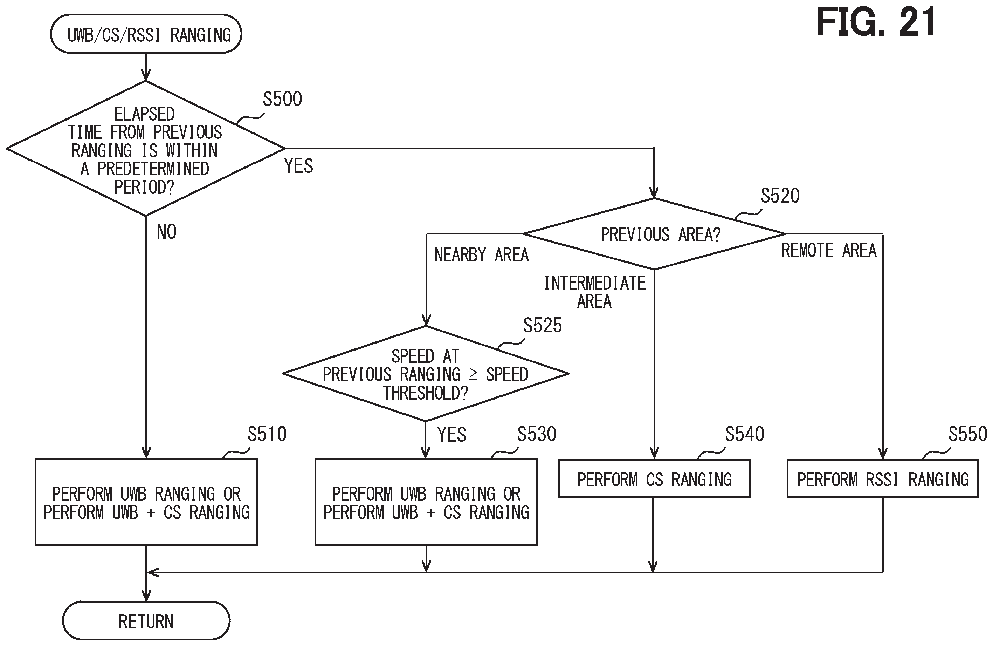

The following will describe an example of using multiple ranging methods while taking into account the moving speed of the mobile device 9. FIG. 21 shows an example of a process that uses multiple ranging methods with consideration of the moving speed of the mobile device 9. The flowchart shown in FIG. 21 shows a detail of the process executed in S430 shown in FIG. 19. In the flowchart shown in FIG. 21, the process at S525 is added compared to the flowchart shown in FIG. 20. The process executed in the flowchart of FIG. 21, except for S525, is the same as that executed in the flowchart of FIG. 20, and the detailed description thereof will be simplified or omitted. The use of different ranging methods, taking into account the moving speed of the mobile device 9, is performed when the current ranging is performed within a predetermined time period from execution of the previous ranging to detect the position (area) of mobile device 9, similar to the use of different ranging methods depending on the area in which the mobile device 9 is located.

In response to determining, in S520, that the position of mobile device 9 detected in the previous ranging is in the nearby area (entry area), the process proceeds to S525. In S525, the DK-ECU 1 determines whether the moving speed of the mobile device 9 at the time of the previous ranging is equal to or greater than a speed threshold. The moving speed of mobile device 9 can be determined, for example, by dividing the distance between the position of mobile device 9 two ranging cycles ago and the position of the mobile device 9 in the previous ranging by the detection time interval of the ranging process.

In response to the DK-ECU 1 determining that the moving speed is equal to or greater than the speed threshold, the process proceeds to S530. In S530, as described above, the DK-ECU 1 instructs the UWB module 3 to perform UWB ranging, or simultaneously instructs the UWB module 3 to perform UWB ranging and instructs the BLE module 2 to perform CS ranging. In other words, in response to determining that the traveling speed of the mobile device 9 is equal to or greater than the speed threshold, multiple different communication methods may be selected, and position related values may be obtained using the selected multiple different communication methods. As a result, the DK-ECU 1 can detect the position (area) of the mobile device 9 with high accuracy when the mobile device 9 moves at a speed equal to or higher than the speed threshold.

When the DK-ECU 1 determines that the moving speed of the mobile device 9 is below the speed threshold, the DK-ECU 1 proceeds to S540. In S540, as described above, the DK-ECU 1 instructs the BLE module 2 to perform CS ranging. In other words, when the mobile device 9 moves at a speed lower than the speed threshold, fewer communication methods may be selected compared with the communication methods selected when the moving speed is equal to or higher than the speed threshold. This configuration enables the detection of position (area) of the mobile device 9 with a certain degree of accuracy while saving power consumption, especially when the moving speed is low and thus the amount of change in the position of mobile device 9 is considered to be small.

In the process shown in flowchart of FIG. 21, when the previously detected position of the mobile device 9 is determined to be in an intermediate area or a remote area, the communication method for ranging purpose used to detect the position of the mobile device 9 may be switched according to the moving speed of the mobile device 9. For example, in response to determining that the previous position of the mobile device 9 was in an intermediate area, and the moving speed of the mobile device 9 is determined to be equal to or higher than the speed threshold, the process in S530 may be executed to detect the precise position of the mobile device 9. In response to determining that the previous position of the mobile device 9 was in a remote area, and the moving speed of the mobile device 9 is determined to be equal to or greater than the speed threshold, the process in S540 may be executed to detect the position of the mobile device 9 with improved accuracy.

The process executed in S445 and S450, and S460 and S465 in the flowchart of FIG. 19 is the same as the process executed in S345 and S350, and S330 and S335 in the flowchart of FIG. 13, and the detailed description thereof will be omitted. The process executed in S425, S440, S455, and S470 in the flowchart of FIG. 19 is the same as the process executed in S340 and S355 in the flowchart of FIG. 13, and the detailed description thereof will be omitted.

### (Modifications)

One exemplary embodiment of the present disclosure is explained above. The present disclosure is not limited to the above-described embodiment, and can be implemented by various modifications without departing from the spirit of the present disclosure.

### (First modification in System Configuration)

In the embodiments described above, the BLE module 2 is located outside the housing of the DK-ECU 1. The present disclosure is not limited to this configuration. For example, the BLE module 2 may be located inside the housing of the DK-ECU 1.

### (Second modification in system configuration)

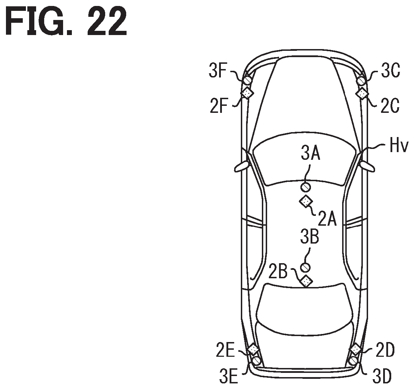

The vehicle-mounted system VS may have, as the BLE module, multiple BLE modules 2A to 2F as shown in FIG. 22. In the example shown in FIG. 22, multiple BLE modules 2A to 2F are arranged in close proximity to multiple UWB modules 3A to 3F. In this case, the position of the mobile device 9 may be detected based on a combination of the UWB ranging results from multiple UWB modules 3 and the CS ranging results from multiple BLE modules 2. Alternatively, the position of the mobile device may be detected separately based on the UWB ranging results and based on the CS ranging results, and then the final position of the mobile device may be detected based on the separately determined positions of the mobile device. For example, when the calculated two positions of the mobile device 9 are equivalent to one another, the calculated position can be determined as the final position of the mobile device 9. When the calculated two positions of the mobile device 9 do not match with one another, the position having higher confidence may be selected as final position based on parameters, such as signal strength used in the ranging process.

In a configuration where multiple BLE modules 2 are used to perform CS ranging, one BLE module 2 may distribute the channel information and timing information used for CS ranging process to the other BLE modules 2, thereby enabling the other BLE modules 2 to intercept (sniffer) the CW signal transmitted from the mobile device 9.

In BLE communication, frequency hopping occurs after a communication connection is established, so normally, only the BLE module 2 that is connected can capture data signal from the mobile device 9. With sniffing technology, by providing channel information and timing information to other BLE modules 2, the other BLE modules 2 can also capture data signal and CW signal from the mobile device 9. As a result, other BLE modules 2 can detect the received signal strength, received phase, received time, or the like from the mobile device 9 without establishing communication connection with the mobile device 9. Therefore, the configuration using sniffing technology has the advantage that multiple BLE modules 2 can perform CS ranging process in parallel.

### (Third modification in system configuration)

In the embodiments described above, the DK-ECU 1 is configured as an independent electronic control unit in the vehicle-mounted system VS. The present disclosure is not limited to this configuration. For example, the functions of DK-ECU 1 may be integrated with another ECU configured to perform different functions.

### (Modification of UWB ranging)

In the embodiment described above, the UWB module 3 measures the RTT, which is the elapsed time from the transmission time of UWB signal to reception of a response signal from the mobile device 9 and corresponds to the position related value, and calculates the device distance based on the RTT. In addition to measuring RTT, or as an alternative to measuring RTT, the UWB module 3 can also measure, as the position related value of UWB communication, the arrival angle and arrival time difference of the UWB signal, and detect the position of the mobile device 9 based on the measured arrival angle and arrival time difference. For example, if the system is configured to measure the arrival angle of the UWB signal in addition to measuring the RTT of the UWB signal, it becomes possible to detect the position (or area) of the mobile device 9 around the vehicle Hv with smaller number of UWB modules 3.

### (Supplementary information on how to obtain single-frequency phase difference)

The BLE module 2 may acquire the single frequency phase difference for each frequency by the active two-way method or the passive two-way method, and calculate the inter-frequency phase difference using the single frequency phase difference. An outline of the active two-way method and the passive two-way method will be described.

The active two-way method is a method in which an initiator and a reflector mutually transmit and receive a CW signal to detect a phase difference between a transmission signal and a received signal, and a single frequency phase difference is specified using the two phase differences. The active two-way system includes a step in which an initiator and a reflector mutually transmitting and receiving CW signals to each other, and a step in which the reflector transmitting the observed received phase (θr) to the initiator.

The initiator is a device that initiates communication, in other words, a device that requests a response. The reflector is a device that returns a response. In the above embodiment, the BLE module 2 corresponds to the initiator, and the mobile device 9 corresponds to the reflector.

Suppose that the initial phase of the initiator is δi, the initial phase of the reflector is δr, the single-frequency phase difference that should be observed depending on the distance between the initiator and the reflector is φ, and the target frequency is f, then these parameters satisfy a relationship θr = φ + δi - δr and θi = φ - δi + δr. Based on this relationship, the average of θi and θr is the single-frequency phase difference (φ), in which the initial phase components of the initiator and reflector are cancelled out respectively. The active two-way method corresponds to a method of calculating an average value of the received phase at the initiator and the received phase at the reflector as a single frequency phase difference. Since a phase difference due to one-way propagation assumed, the average value of θi and θr is used as the single-frequency phase difference. As another aspect, in a case where a phase difference due to reciprocating propagation is assumed as the single frequency phase difference, the single frequency phase difference can be obtained by θi+θr.

The passive two-way method is also a method in which the initiator and the reflector transmit and receive the CW signal to and from each other. The difference from the active two-way method is that the reflector reflects the received phase of the CW signal transmitted from the initiator on the initial phase of the transmission signal, and then transmits the signal. For example, when the received phase at the reflector is θr, a CW signal expressed as z(t) = A·exp{-i(ωt+θr+2πn)} is transmitted. Herein, A represents amplitude. Herein, ω is the angular frequency corresponding to the target frequency (f), and has the relationship ω = 2πf. Herein, n is a natural number and corresponds to the interval between receiving of CW signal by the reflector and transmission of CW signal. According to this method, the received phase monitored by the initiator does not include the initial phase component of the reflector. The received phase observed by the initiator will be the same value as when receiving a CW signal that has been reflected back by a reflective surface, such as a wall. As a result, the initiator can calculate the single frequency phase difference without acquiring the received phase from the reflector. The passive two-way method has an advantage that the reflector does not need to transmit the received phase message, as compared with the active two-way method. As described above, the single frequency phase difference and the inter-frequency phase difference can be executed in various methods.

### (Modification of CS ranging)

The BLE controller 23 may calculate the device distance using RTT instead of, or in addition to, the inter-frequency phase difference. The RTT measured by the BLE controller 23 is the time from the transmission of a predetermined BLE signal requesting a response until the reception of a response signal from the mobile device 9. Transmitting and receiving signals for measuring RTT is also an example of CS ranging communication. Calculating the phase change coefficient or RTT is essentially equivalent to calculating the device distance. Therefore, the process of generating data indicating device distance, such as a phase change coefficient or RTT, based on the phase of the signal received from the mobile device 9 and the time of flight, is also included in the concept of CS ranging. Calculating the distance also includes generating data indirectly indicating the distance.

### (Modification of communication method)

The communication method between the BLE module 2 and the mobile device 9 is not limited to BLE. The communication method may adopt Bluetooth Classic or a different method. The wireless communication compliant to Bluetooth includes both BLE communication and communication compliant to Bluetooth Classic.

### (Application target of the present disclosure)

The present disclosure is applicable to vehicles traveling on a road. In other words, the present disclosure can be installed in multiple vehicles capable of traveling on a road, including not only four-wheeled vehicles but also two-wheeled vehicles, three-wheeled vehicles, and vehicles with more than four wheels. Except the application on vehicles, the present disclosure can be applied to a situation where it is necessary to detect a position of a user holding the mobile device 9.

### (Note 1)

The present disclosure includes multiple technical ideas listed below and multiple combinations thereof. The following combination of technical ideas applies not only to position detection system, but also to position detection method and the computers that perform the method.

### (Technical idea 1)

A position detection system detects a position of a mobile device (9) relative to an object (Hv). The position detection system includes a communication module (2) mounted on the object and performing a wireless communication with the mobile device using a first communication method. The communication module is further configured to enable a wireless communication with the mobile device using a second communication method different from the first communication method. The position detection system includes a determination unit (S325, S410) determines whether the mobile device supports the wireless communication using the second communication method based on the wireless communication with the mobile device using the first communication method. The position detection system includes an acquisition unit (S330, S345, S415, S430, S445, S460) configured to, in response to the determination unit determining that the mobile device supports the wireless communication using the second communication method, instruct the communication module to perform the wireless communication with the mobile device using the second communication method and acquire a position related value related to the position of the mobile device from a wireless communication signal, which is transmitted from the mobile device using the second communication method. The acquisition unit is further configured to, in response to the determination unit determining that the mobile device does not support the wireless communication using the second communication method, acquire a position related value related to the position of the mobile device from a wireless communication signal, which is transmitted from the mobile device using the first communication method. The position detection system includes a decision unit (S340, S350, S420, S435, S450, S465) configured to decide the position of the mobile device relative to the object or an area in which the mobile device is located, based on the position related value acquired by the acquisition unit.

### (Technical idea 2)

In the position detection system according to technical idea 1, the first communication method is Bluetooth low energy (BLE) communication. The second communication method is BLE channel sounding (BLECS) communication, which transmits and receives continuous wave signals having periodically changing frequencies.

### (Technical idea 3)

In the position detection system according to technical idea 2, the position related value in the BLE communication is a received signal strength. The position related value in the BLECS communication is a received phase difference of the continuous wave signals having different frequencies.

### (Technical idea 4)

In the position detection system according to any one of technical ideas 1 to 3, the communication module is further configured to enable a wireless communication with the mobile device using a third communication method. The determination unit (S410) is further configured to determine whether the mobile device supports the wireless communication using the third communication method based on the wireless communication with the mobile device using the first communication method.

### (Technical idea 5)

In the position detection system according to technical idea 4, the third communication method is ultra-wideband (UWB) communication. The position related value in the UWB communication is at least one of a time of flight of a UWB communication signal communicated between the communication module and the mobile device, an arrival angle of the UWB communication signal received by the communication module, or a difference in arrival time points of the UWB communication signals at different positions.

### (Technical idea 6)

In the position detection system according to technical idea 2 or 3, the communication module is further configured to enable a wireless communication with the mobile device using a third communication method. The third communication method is UWB communication. The communication module includes a first communication module (2), which enables the wireless communication with the mobile device using the first communication method and the second communication method, and a second communication module (3), which enables the wireless communication with the mobile device using the third communication method.

### (Technical idea 7)

In the position detection system according to technical idea 2 or 3, the communication module includes multiple antennas (22A, 22B). The communication module uses one of the multiple antennas when performing the BLE communication. The communication module switches a use antenna among the multiple antennas when performing the BLECS communication.

### (Technical idea 8)

In the position detection system according to technical idea 7, the communication module switches the use antenna among the multiple antennas so that the continuous wave signal having the same frequency in the BLECS communication is wirelessly transmitted from each of the multiple antennas.

### (Technical idea 9)

In the position detection system according to any one of technical ideas 1 to 8, the determination unit inquires the mobile device about whether the mobile device supports a different communication method other than the first communication method via the wireless communication using the first communication method. The determination unit determines that the mobile device supports the different communication method other than the first communication method upon receiving a reply to the inquire or receiving a reply indicating that the mobile device supports the different communication method other than the first communication method.

### (Technical idea 10)

The position detection system according to technical idea 9 further includes a registration unit (S230, S270) configured to, after the determination unit determining whether the mobile device supports the different communication method other than the first communication method, register relation information, which indicates whether the mobile device supports the different communication method other than the first communication method, correlated to identification information of the mobile device.

### (Technical idea 11)

In the position detection system according to technical idea 10, when the relation information of the mobile device has been registered correlated to the identification information of the mobile device obtained by the wireless communication performed with the mobile device using the first communication method, the determination unit determines, based on the registered relation information, whether the mobile device supports the different communication method other than the first communication method.

### (Technical idea 12)

In the position detection system according to any one of technical ideas 1 to 8, in the wireless communication using the first communication method, the mobile device transmits, to the communication module, information indicating that the mobile device supports a communication method other than the first communication method. The determination unit is configured to determine, based on the information transmitted from the mobile device, whether the mobile device supports the communication method other than the first communication method.

### (Technical idea 13)

The position detection system according to technical idea 12, further includes a registration unit (S230, S270) configured to, after the determination unit determining whether the mobile device supports the different communication method other than the first communication method, register relation information, which indicates whether the mobile device supports the different communication method other than the first communication method, correlated to identification information of the mobile device.

### (Technical idea 14)

In the position detection system according to technical idea 13, when the relation information of the mobile device has been registered correlated to the identification information of the mobile device obtained by the wireless communication performed with the mobile device using the first communication method, the determination unit determines, based on the registered relation information, whether the mobile device supports the different communication method other than the first communication method.

### (Technical idea 15)

The position detection system according to any one of technical ideas 1 to 14, further includes a first selection unit (S520) configured to select a communication method to be used in the wireless communication for acquiring the position related value related to the position of the mobile device based on a relative position of the mobile device with respect to the object when the determination unit determines that the mobile device supports a different communication method other than the first communication method.

### (Technical idea 16)

In the position detection system according to technical idea 15, the first selection unit is configured to select multiple communication methods to be used in the wireless communication for acquiring the position related values when the relative position of the mobile device with respect to the object belongs to a nearby area of the object. The first selection unit is configured to select a smaller number of communication methods to be used in the wireless communication for acquiring the position related value when the relative position of the mobile device with respect to the object does not belong to the nearby area of the object.

### (Technical idea 17)

In the position detection system according to technical idea 15 or 16, when a time interval between a previous acquisition time of the position related value and a current acquisition time of the position related value is within a predetermined period, the first selection unit selects the communication method to be used in the wireless communication for acquiring the position related value related to the position of the mobile device, based on the relative position of the mobile device with respect to the object.

### (Technical idea 18)

The position detection system according to any one of technical ideas 1 to 16, further includes a second selection unit (S525) configured to select a communication method to be used in the wireless communication for acquiring the position related value related to the position of the mobile device based on a moving speed of the mobile device when the determination unit determines that the mobile device supports a different communication method other than the first communication method.

### (Technical idea 19)

In the position detection system according to technical idea 18, the second selection unit is configured to select multiple communication methods to be used in the wireless communication for acquiring the position related values when the moving speed of the mobile device is equal to or higher than a predetermined threshold. The second selection unit is configured to select a smaller number of communication methods to be used in the wireless communication for acquiring the position related values when the moving speed of the mobile device is lower than the predetermined threshold.

### (Technical idea 20)

In the position detection system according to technical idea 18 or 19, when a time interval between a previous acquisition time of the position related value and a current acquisition time of the position related value is within a predetermined period, the second selection unit selects the communication method to be used in the wireless communication for acquiring the position related value related to the position of the mobile device, based on the moving speed of the mobile device.

### (Note 2)

Each of the various flowcharts illustrated in the present disclosure is an example, and the number of steps constituting the flowchart and the execution order of the processing can be appropriately changed. The terms used in the present disclosure, such as "wireless signal," "BLE signal," "data," "message," "packet," "frame," "package," "dataset," and "information," may be interpreted interchangeably.

The device, the system and the method there of, which have been described in the present disclosure, may be implemented by a dedicated computer which constitutes a processor programmed to execute one or more functions corresponding to the computer program. The device and the method thereof described in the present disclosure may be implemented by a dedicated hardware logic circuit. The device and the method thereof described in the present disclosure may be implemented by one or more dedicated computers which is constituted by combinations of a processor for executing computer programs and one or more hardware logic circuits. For example, partial or all of the functions of the BLE controller 23 may be implemented as hardware circuits. A configuration in which a certain function is implemented by hardware logic circuitry includes a configuration in which the function is implemented using one or more ICs or the like. As the processor (for example, arithmetic core), a CPU, an MPU, a GPU, a DFP (Data Flow Processor), or the like can be adopted. Partial or all of the functions of the BLE controller 23 may be implemented using a system-on-chip (SoC), an integrated circuit (IC), or a field-programmable gate array (FPGA). The concept of IC includes ASIC (Application Specific Integrated Circuits). The computer program described above may be stored in a computer-readable non-transitory tangible storage medium as instructions to be executed by a computer. As a storage medium for storing the computer program, a hard disk drive (i.e., HDD), a solid state drive (i.e., SSD), a flash memory, or the like can be adopted. In the present disclosure, a program for causing a computer to function as the BLE controller 123 or the main controller 11, and a form of a non-transitory tangible storage medium such as a semiconductor memory in which the program is stored are also included in the scope of the present disclosure.

## Claims

1. A position detection system for detecting a position of a mobile device (9) relative to an object (Hv), the position detection system comprising:
a communication module (2) mounted on the object and performing a wireless communication with the mobile device using a first communication method, wherein the communication module is further configured to enable a wireless communication with the mobile device using a second communication method different from the first communication method;
a determination unit (S325, S410) determines whether the mobile device supports the wireless communication using the second communication method based on the wireless communication with the mobile device using the first communication method;
an acquisition unit (S330, S345, S415, S430, S445, S460) configured to, in response to the determination unit determining that the mobile device supports the wireless communication using the second communication method, instruct the communication module to perform the wireless communication with the mobile device using the second communication method and acquire a position related value related to the position of the mobile device from a wireless communication signal, which is transmitted from the mobile device using the second communication method, wherein the acquisition unit is further configured to, in response to the determination unit determining that the mobile device does not support the wireless communication using the second communication method, acquire a position related value related to the position of the mobile device from a wireless communication signal, which is transmitted from the mobile device using the first communication method; and
a decision unit (S340, S350, S420, S435, S450, S465) configured to decide the position of the mobile device relative to the object or an area in which the mobile device is located, based on the position related value acquired by the acquisition unit.

2. The position detection system according to claim 1, wherein
the first communication method is Bluetooth low energy (BLE) communication, and
the second communication method is BLE channel sounding (BLECS) communication, which transmits and receives continuous wave signals having periodically changing frequencies.

3. The position detection system according to claim 2, wherein
the position related value in the BLE communication is a received signal strength, and
the position related value in the BLECS communication is a received phase difference of the continuous wave signals having different frequencies.

4. The position detection system according to any one of claims 1 to 3, wherein
the communication module is further configured to enable a wireless communication with the mobile device using a third communication method, and
the determination unit (S410) is further configured to determine whether the mobile device supports the wireless communication using the third communication method based on the wireless communication with the mobile device using the first communication method.

5. The position detection system according to claim 4, wherein
the third communication method is ultra-wideband (UWB) communication, and
the position related value in the UWB communication is at least one of a time of flight of a UWB communication signal communicated between the communication module and the mobile device, an arrival angle of the UWB communication signal received by the communication module, or a difference in arrival time points of the UWB communication signals at different positions.

6. The position detection system according to claim 2 or 3, wherein
the communication module is further configured to enable a wireless communication with the mobile device using a third communication method,
the third communication method is UWB communication, and
the communication module includes a first communication module (2), which enables the wireless communication with the mobile device using the first communication method and the second communication method, and a second communication module (3), which enables the wireless communication with the mobile device using the third communication method.

7. The position detection system according to claim 2 or 3, wherein
the communication module includes multiple antennas (22A, 22B),
the communication module uses one of the multiple antennas when performing the BLE communication, and
the communication module switches a use antenna among the multiple antennas when performing the BLECS communication.

8. The position detection system according to claim 7, wherein
the communication module switches the use antenna among the multiple antennas so that the continuous wave signal having the same frequency in the BLECS communication is wirelessly transmitted from each of the multiple antennas.

9. The position detection system according to any one of claims 1 to 3, wherein
the determination unit inquires the mobile device about whether the mobile device supports a different communication method other than the first communication method via the wireless communication using the first communication method, and
the determination unit determines that the mobile device supports the different communication method other than the first communication method upon receiving a reply to the inquire or receiving a reply indicating that the mobile device supports the different communication method other than the first communication method.

10. The position detection system according to claim 9, further comprising
a registration unit (S230, S270) configured to, after the determination unit determining whether the mobile device supports the different communication method other than the first communication method, register relation information, which indicates whether the mobile device supports the different communication method other than the first communication method, correlated to identification information of the mobile device.

11. The position detection system according to claim 10, wherein,
when the relation information of the mobile device has been registered correlated to the identification information of the mobile device obtained by the wireless communication performed with the mobile device using the first communication method, the determination unit determines, based on the registered relation information, whether the mobile device supports the different communication method other than the first communication method.

12. The position detection system according to any one of claims 1 to 3, wherein,
in the wireless communication using the first communication method, the mobile device transmits, to the communication module, information indicating that the mobile device supports a communication method other than the first communication method, and
the determination unit is configured to determine, based on the information transmitted from the mobile device, whether the mobile device supports the communication method other than the first communication method.

13. The position detection system according to claim 12, further comprising
a registration unit (S230, S270) configured to, after the determination unit determining whether the mobile device supports the different communication method other than the first communication method, register relation information, which indicates whether the mobile device supports the different communication method other than the first communication method, correlated to identification information of the mobile device.

14. The position detection system according to claim 13, wherein,
when the relation information of the mobile device has been registered correlated to the identification information of the mobile device obtained by the wireless communication performed with the mobile device using the first communication method, the determination unit determines, based on the registered relation information, whether the mobile device supports the different communication method other than the first communication method.

15. The position detection system according to any one of claims 1 to 3, further comprising
a first selection unit (S520) configured to select a communication method to be used in the wireless communication for acquiring the position related value related to the position of the mobile device based on a relative position of the mobile device with respect to the object when the determination unit determines that the mobile device supports a different communication method other than the first communication method.

16. The position detection system according to claim 15, wherein
the first selection unit is configured to select multiple communication methods to be used in the wireless communication for acquiring the position related values when the relative position of the mobile device with respect to the object belongs to a nearby area of the object, and
the first selection unit is configured to select a smaller number of communication methods to be used in the wireless communication for acquiring the position related value when the relative position of the mobile device with respect to the object does not belong to the nearby area of the object.

17. The position detection system according to claim 15, wherein,
when a time interval between a previous acquisition time of the position related value and a current acquisition time of the position related value is within a predetermined period, the first selection unit selects the communication method to be used in the wireless communication for acquiring the position related value related to the position of the mobile device, based on the relative position of the mobile device with respect to the object.

18. The position detection system according to any one of claims 1 to 3, further comprising
a second selection unit (S525) configured to select a communication method to be used in the wireless communication for acquiring the position related value related to the position of the mobile device based on a moving speed of the mobile device when the determination unit determines that the mobile device supports a different communication method other than the first communication method.

19. The position detection system according to claim 18, wherein
the second selection unit is configured to select multiple communication methods to be used in the wireless communication for acquiring the position related values when the moving speed of the mobile device is equal to or higher than a predetermined threshold, and
the second selection unit is configured to select a smaller number of communication methods to be used in the wireless communication for acquiring the position related values when the moving speed of the mobile device is lower than the predetermined threshold.

20. The position detection system according to claim 18, wherein,
when a time interval between a previous acquisition time of the position related value and a current acquisition time of the position related value is within a predetermined period, the second selection unit selects the communication method to be used in the wireless communication for acquiring the position related value related to the position of the mobile device, based on the moving speed of the mobile device.

21. A position detection method performed by a computer (1) for detecting a position of a mobile device (9) relative to an object (Hv), the position detection method comprising:
performing, using a communication module (2) mounted on the object, a wireless communication with the mobile device using a first communication method (S300, S400), wherein the communication module is further configured to enable a wireless communication with the mobile device using a second communication method different from the first communication method;
determining whether the mobile device supports the wireless communication using the second communication method based on the wireless communication with the mobile device using the first communication method (S325, S410);
in response to determining that the mobile device supports the wireless communication using the second communication method, instructing the communication module to perform the wireless communication with the mobile device using the second communication method and acquiring a position related value related to the position of the mobile device from a wireless communication signal, which is transmitted from the mobile device using the second communication method, in response to determining that the mobile device does not support the wireless communication using the second communication method, acquiring a position related value related to the position of the mobile device from a wireless communication signal, which is transmitted from the mobile device using the first communication method (S330, S345, S415, S430, S445, S460); and
deciding the position of the mobile device relative to the object or an area in which the mobile device is located, based on the position related value (S340, S350, S420, S435, S450, S465).

22. A computer (1), which executes a process to detect a position of a mobile device relative to an object (Hv) based on a wireless communication signal communicated in a wireless communication between a communication module (2) mounted on the object and the mobile device (9), wherein the communication module is configured to enable a wireless communication with the mobile device using a first communication method and a second communication method different from the first communication method,
the computer is configured to execute the following instructions comprising:
determining whether the mobile device supports the wireless communication using the second communication method based on the wireless communication with the mobile device using the first communication method (S325, S410);
in response to determining that the mobile device supports the wireless communication using the second communication method, instructing the communication module to perform the wireless communication with the mobile device using the second communication method and acquiring a position related value related to the position of the mobile device from a wireless communication signal, which is transmitted from the mobile device using the second communication method, in response to determining that the mobile device does not support the wireless communication using the second communication method, acquiring a position related value related to the position of the mobile device from a wireless communication signal, which is transmitted from the mobile device using the first communication method (S330, S345, S415, S430, S445, S460); and
deciding the position of the mobile device relative to the object or an area in which the mobile device is located, based on the position related value (S340, S350, S420, S435, S450, S465).
